# EUROPEAN PATENT SPECIFICATION

(11) **EP 3 453 222 B1**
(45) Date of publication and mention of the grant of the patent: **23.03.2022**
(21) Application number: 16794127.7
(22) Date of filing: 26.10.2016
(51) Int. Cl.: H04W 80/02, H04W 28/06

(54) **HIGHER LAYER DESIGN FOR USER PLANE PACKET PROCESSING IN FIFTH GENERATION NEW RADIO THINGS SIDELINK COMMUNICATION**
DESIGN HÖHERER SCHICHTEN ZUR BENUTZEREBENENPACKETVERARBEITUNG IN DER KOMMUNIKATION ÜBER NEW-RADIO (NR)-THINGS-SIDELINK (TSL) DER FÜNFTEN GENERATION (5G)
CONCEPTION DE COUCHE SUPÉRIEURE DESTINÉE AU TRAITEMENT DE PAQUETS DE PLAN UTILISATEUR DANS UNE COMMUNICATION DE LIAISON LATÉRALE D'OBJET (TSL) DE NOUVELLE RADIO (NR) DE CINQUIÈME GÉNÉRATION (5G)

(30) Priority: 03.05.2016 US 201662331237 P
(43) Date of publication of application: 13.03.2019
(73) Proprietor: Intel Corporation, Santa Clara, CA 95054 (US)
(72) Inventor: JHA, Satish C., Portland, Oregon 97229 (US); FOUAD, Yaser M., North Plains, Oregon 97133 (US); LI, Qian, Beaverton OR 97006 (US); LI, Guangjie, Beijing 100192 (CN); KIM, Joonbeom, Carrollton, Texas 75010 (US); SHARMA BANJADE, Vesh Raj, Hillsboro, Oregon 97124 (US); GHOZLAN, Hassan, Hillsboro, Oregon 97124 (US); YING, Dawei, Hillsboro, Oregon 97124 (US); LU, Lu, Portland, Oregon 97229 (US); YANG, Xuebin, Beijing 100013 (CN); ARDITTI ILITZKY, David, 44638 Guadalajara-JAL (MX); NOH, Song, Hillsboro, Oregon 97124 (US); WU, Xiaoyun May, Portland, Oregon 97229 (US); WU, Geng, Portland, OR 97229 (US)
(74) Representative: Goddar, Heinz J.
(86) International application number: PCT/US2016/058786
(87) International publication number: WO 2017/192164

(56) References cited:
- EP-A1- 2 334 026
- ERICSSON: "Layer- 2 protocol stack for PC5-based V2X", 3GPP DRAFT; R2-156633 - PROTOCOL STACK FOR PC5-BASED V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051005996, Retrieved from the Internet: URL:http://www.3gpp.org/ftp/Meetings_3GPP_ SYNC/RAN2/Docs/ [retrieved on 2015-11-16]
- HUAWEI (RAPPORTEUR): "Introduction of NB-IoT", 3GPP DRAFT; R2-163218 36.300 RUNNING CR TO CAPTURE AGREEMENTS ON NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Sophia-Antipolis, Fr; 20160503 - 20160504 29 April 2016 (2016-04-29), XP051095126, Retrieved from the Internet: URL:http://www.3gpp.org/ftp/tsg_ran/WG2_RL 2/TSGR2_AHs/2016_05_LTE_NB_IoT/Docs/ [retrieved on 2016-04-29]
- "3rd Generation Partnership Project; Technical Specification Group Radio Access Network; Evolved Universal Terrestrial Radio Access (E-UTRA); Medium Access Control (MAC) protocol specification (Release 12)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.7.0, 24 September 2015 (2015-09-24), pages 1-77, XP050996302, [retrieved on 2015-09-24]
- LG ELECTRONICS INC: "5G user plane protocol design", 3GPP DRAFT; R2-162861 5G USER PLANE PROTOCOL DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082602, Retrieved from the Internet: URL:http://www.3gpp.org/ftp/tsg_ran/WG2_RL 2/TSGR2_93bis/Docs/ [retrieved on 2016-04-02]

## Description

### FIELD

The present disclosure relates to wireless technology, and more specifically to a higher layer design for Fifth Generation (5G) New Radio (NR) Things (t) Sidelink (tSL) communications between 5G NR Things user equipments (tUEs) and network UEs (nUEs).

### BACKGROUND

Conventional LTE (Long Term Evolution) systems employ a higher layer protocol stack that encompasses the protocol layers between PHY (the physical layer) and the RRC (radio resource control) layer for control plane traffic or the IP (Internet protocol) or application layers for user plane traffic. In conventional LTE, these higher layer protocol layers are the MAC (medium access control), RLC (radio link control), and PDCP (packet data convergence protocol) layers.

Such conventional LTE system is for example also considered in EP 2 334 026 A1. EP 2 334 026 A1 aims at improving transmission efficiency of data and exercise reliable QoS control. To solve this problem, a free space allocation unit preferentially sets space that can be allocated without dividing one RLC-SDU of free space of an MAC-PDU as allocation space of the RLC-SDU. An RLC-PDU creation unit creates an RLC-PDU by adding an appropriate header of an RLC layer to the RLC-SDU output from an RLC-SDU buffer unit or a retransmission buffer unit. A radio resource information acquisition unit outputs free space information to the free space allocation unit of an RLC processing unit with a highest priority among RLC processing units not notified of the free space information of the MAC-PDU. An MAC-PDU creation unit multiplexes the RLC-PDU according to the allocation space notified from the free space allocation unit of each RLC processing unit.

3GPP Tdoc. R2-156633, "Layer- 2 Protocol Stack for PC5-based V2X", Ericsson, 3GPP TSG-RAN WG2 #92, November 2015 addresses the protocol stack for the direct interface between UEs to support the V2X applications, with focus on the layer 2 protocols. It is proposed that the PC5 user plane protocol stack for PC5-based V2X is designed with the ProSe PC5-U protocol stack, i.e. implementing the full PDCP, RLC and MAC layer protocols.

3GPP Tdoc. R2-156633, "Layer- 2 Protocol Stack for PC5-based V2X", Ericsson, 3GPP TSG-RAN WG2 #92, November 2015 addresses the protocol stack for the direct interface between UEs to support the V2X applications, with focus on the layer 2 protocols. It is proposed that the PC5 user plane protocol stack for PC5-based V2X is designed with the ProSe PC5-U protocol stack, i.e. implementing the full PDCP, RLC and MAC layer protocols.

3GPP TS 36.321, "Medium Access Control (MAC) protocol specification (Release 12)", Version 12.7.0, September 2015, specifies the E-UTRA MAC protocol.

3GPP Tdoc. R2-162861, "5G user plane protocol design", 3GPP TSG-RAN WG2 Meeting #93bis, April 2016 provides an initial thought on SG user plane protocol. In order to simplify the user plane protocol, this document proposes that RB multiplexing to one MAC PDU is not supported in 5G user plane protocol, to use only one L2 sequence number in 5G user plane protocol, and to study the feasibility of combined L2 layer in 5G user plane protocol.

### SUMMARY

The invention is defined by the subject matter of the independent claims. Advantageous embodiments are subject to the dependent claims.

### BRIEF DESCRIPTION OF THE DRAWINGS

**FIG. 1** is a block diagram illustrating an example user equipment (UE) useable in connection with various aspects described herein.
**FIG. 2** is an example diagram of a communication system 200 that can facilitate tSL (5G (Fifth Generation) NR (New Radio) Things (t) Sidelink (SL)) communications according to various aspects described herein.
**FIG. 3** is a diagram illustrating a protocol stack for a tUE (5G NR Things User Equipment)-nUE (network User Equipment) or tUE-tUE interface (e.g., the tSL (5G NR Things Sidelink) Xu-s interface discussed herein), according to various aspects described herein.
**FIG. 4** is a diagram illustrating an example functional overview of two peer tSL-HL entities according to various aspects described herein.
**FIG. 5** is a flow diagram illustrating processing details user plane (UP) data may go through at a tSL-HL layer at a transmitting tSL-HL entity according to various aspects described herein.
**FIG. 6** is a flow diagram illustrating processing details user plane (UP) data may go through at a tSL-HL layer at a receiving tSL-HL entity according to various aspects described herein.
**FIG. 7** is a block diagram illustrating a system that facilitates a higher layer for 5G NR Things communication (tSL-HL) at a UE (e.g., network UE (nUE) or 5G NR Things UE (tUE)), according to various aspects described herein.
**FIG. 8** is a flow diagram illustrating a method that facilitates generation of a tSL-HL PDU (protocol data unit) from one or more upper layer UP (user plane) packets, according to various aspects described herein.
**FIG. 9** is a flow diagram illustrating a method that facilitates generation and in-order delivery of one or more upper layer UP packets from one or more received TBs (transport blocks), according to various aspects described herein.
**FIG. 10A** is a diagram illustrating an example of a padding subheader that can be added at the beginning of a UP tSL-HL PDU when only one byte of padding can be added to fill the remaining grant, according to various aspects described herein.
**FIG. 10B** is a diagram illustrating an example of a padding subheader that can be added at the beginning of a UP tSL-HL PDU when two bytes of padding can be added to fill the remaining grant, according to various aspects described herein.
**FIG. 11A** is a diagram illustrating an example of a portion of a header for a UP tSL-HL PDU for new transmission that contains a wHL UP SDU (service data unit) and a UP SDU Segment with 7 bit segment number, according to various aspects described herein.
**FIG. 11B** is a diagram illustrating an example of a portion of a header for a segmentation of a UP wHL PDU during retransmission due to a smaller grant for a segment other than the last segment of a PDU, according to various aspects described herein.
**FIG. 12** is a diagram illustrating an example of a portion of a header for a UP tSL-HL PDU during retransmission that contains the last segment of an original UP wHL PDU and the first Segment of another original UP wHL PDU from the Retransmission Buffer, according to various aspects described herein.

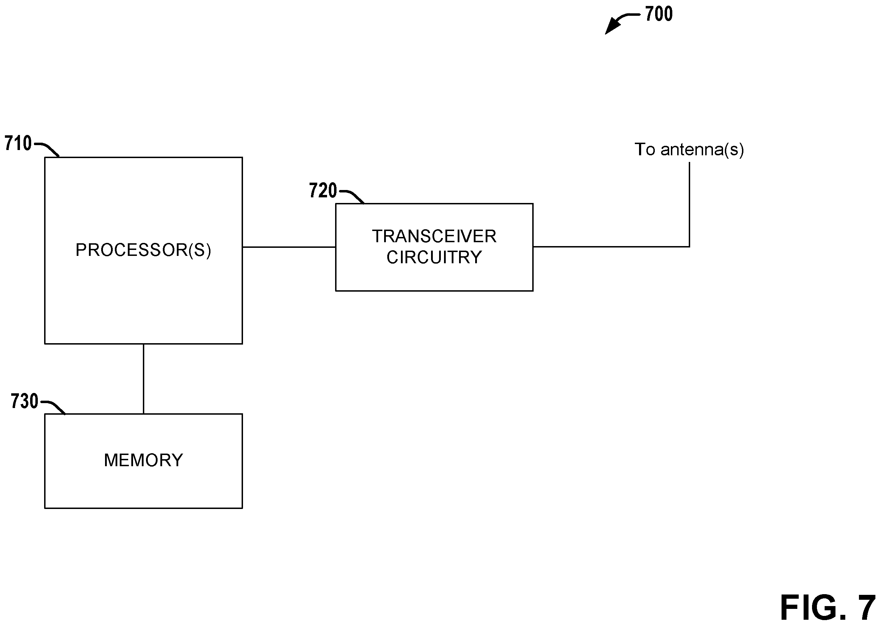

The invention is disclosed in relation to figure 7 and the other figures disclose non-claimed embodiments/background embodiments useful for understanding the invention.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

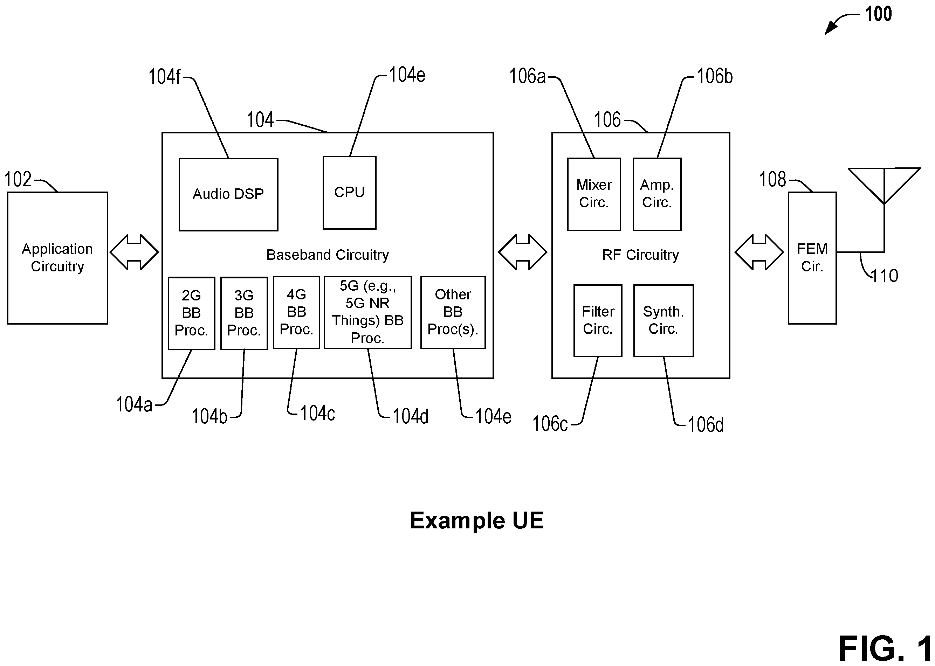

Embodiments described herein may be implemented into a system using any suitably configured hardware and/or software. **FIG. 1** illustrates, for one embodiment, example components of a User Equipment (UE) device 100. In some embodiments, the UE device 100 may include application circuitry 102, baseband circuitry 104, Radio Frequency (RF) circuitry 106, front-end module (FEM) circuitry 108 and one or more antennas 110, coupled together at least as shown.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, fifth generation (5G) baseband processor 104d (e.g., a 5G NR (New Radio) Things baseband processor, etc.), and/or other baseband processor(s) 104e for other existing generations, generations in development or to be developed in the future (e.g., one or more additional fifth generation (5G) baseband processors, 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some dual-mode embodiments, a separate radio IC circuitry may be provided for processing signals for each spectrum, although the scope of the embodiments is not limited in this respect.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110.

In some embodiments, the UE device 100 may include additional elements such as, for example, memory/storage, display, camera, sensor, and/or input/output (I/O) interface.

Additionally, although the above example discussion of device 100 is in the context of a UE device (e.g., a tUE (Fifth Generation (5G) New Radio (NR) Things (t) User Equipment) or a nUE (network UE)), in various aspects, a similar device can be employed in connection with a base station (BS) such as an Evolved NodeB (eNB), etc.

In various aspects, techniques disclosed herein can employ a simplified higher layer design for communication between a tUE and a nUE, involving a single layer - referred to herein as tSL-HL (5G NR Things Sidelink (SL) Higher Layer (HL))-between an upper layer (e.g., an IP (Internet Protocol) layer, an application layer, etc.) and tSL-PHY (the physical layer) for the user plane, or between a tRRC (5G NR Things Radio Resource Control (RRC)) layer and tSL-PHY for the control plane.

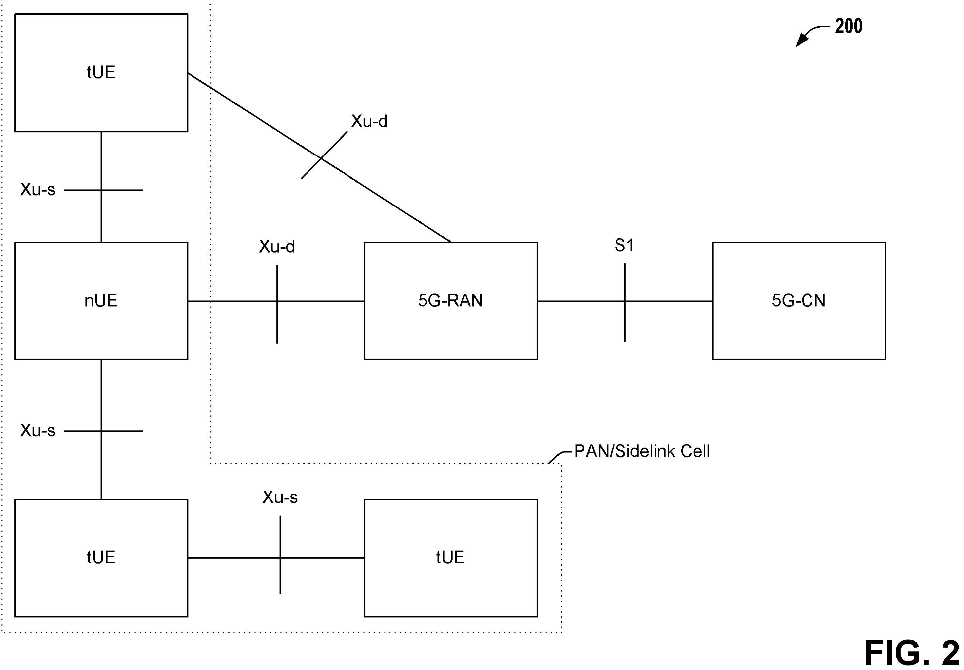

Referring to **FIG. 2**, illustrated is an example diagram of a communication system 200 that can facilitate tSL (5G (Fifth Generation) NR (New Radio) Things (t) Sidelink (SL)) communications according to various aspects described herein. In system 200, Things devices (e.g., wearable devices, etc.) can be supported over a 5G NR-Things interface referred to herein as Xu-s. The communication system of FIG. 2 shows the following network nodes and interfaces: (1) a nUE (network UE) with full sidelink and direct link protocol stacks (e.g., with full C/U (control/user)-plane functions), which can act as a master UE in a sidelink cell/PAN (personal area network); (2) three tUEs (Things UEs, e.g., wearable UEs), which have a full sidelink protocol stack and can have (or can omit) a standalone direct link protocol stack, and can act as a slave UE in the sidelink cell/PAN; (3) a sidelink cell/PAN comprising the nUE and associated tUEs, which can employ mutual authentication to form the PAN; (4) the Xu-d interface, the radio link interface between the nUE/tUE and the 5G infrastructure; (5) the Xu-s interface, the radio link interface between the nUE and a tUE or between two tUEs; (6) the 5G-RAN (5G Radio Access Network); and (7) the 5G Core Network (5G-CN).

Various embodiments discussed herein relate to the Xu-s interface shown in FIG. 2. In various situations, a tUE can communicate with the 5G-RAN via the nUE. Each nUE can have several tUEs associated with it which together form a PAN (which can also be referred to herein as a Sidelink Cell). In general, there can be a large number of nUEs in a geographical region, each with their own PANs, which can create a high density network scenario. The 5G-RAN (or E-UTRAN (Evolved Universal Terrestrial Radio Access Network)) can assign a common resource pool for 5G NR-Things Sidelink Communication. This resource pool can be shared among multiple PANs in a close geographical area and among tUEs within each PAN on a contention based resource access basis. Each nUE can have at least the following two higher layer protocol stacks: (a) one for the 5G NR-Things Sidelink (tSL) Communication interface between tUE and nUE and (b) one for the 5G NR-Things Directlink Communication interface between nUE and 5G-RAN. The Higher Layer protocol stack for the interface nUE-5G-RAN can be the LTE Uu stack or a LTE evolved 5G protocol stack. As used herein, higher layer protocol stack refers mainly to protocol layer(s) in between tSL-PHY (the physical layer, also referred to herein as lower layer) and IP (Internet Protocol)/Application layers (also referred to herein as upper layer) in user plane. For example, higher layer refer to MAC (Medium Access Control), RLC (Radio Link Control), and PDCP (Packet Data Convergence Protocol) layers of a conventional LTE system.

Due to the contention environment for communication over the Xu-s interface, it is expected that each packet transmission (i.e. tSL-PHY transport block TB size) can be shorter in 5G NR-Things Sidelink Communication in order to reduce the impact of collision on system performance. For example, the TB (Transport Block) size can be of only a few Bytes (as an example, in some embodiments, the TB size can be less than 75 Bytes, although greater or lesser sizes can be employed in other embodiments). In such scenarios, reducing the size of the packet header added at the higher layer can maintain a reasonable data-to-Packet Header ratio. The higher layer protocol design and packet processing procedure design discussed herein for higher layer can minimize the higher layer protocol header overhead per packet transmission. In various embodiments, The 5G NR Things higher layer design for the user plane discussed herein can have the following features: (1) A simplified higher layer protocol design, which can simplify higher layer functionalities and to avoid addition of packet headers by multiple layers; (2) functionalities of higher layer protocol customized for 5G NR-Things Sidelink Communication features; (3) Reduced number of protocol-layer-specific header fields (e.g., avoiding multiple levels of packet ID (such as sequence number) addition); (4) Shorter size of various packet header fields; (5) Packet segmentation and Combination with lower Packet header overhead; and (6) Retransmission of packets with lower Packet header overhead.

In various aspects, all higher layer functionalities (such as conventional LTE MAC/RLC/PDCP functionalities) for user plane data processing can be merged into a single layer referred to herein as 5G NR-Things Sidelink Higher Layer (tSL-HL), which can reduce packet header during transmission over the air-interface Xu-s. The packet header reduction can provide significant advantages in throughput, given that each tSL-PHY-SDU (i.e. tSL-PHY TB) can typically be of very small size (e.g., 180 -600 bits, which is 22.5-75 Bytes) for the Xu-s, which is very small in comparison to that of conventional LTE.

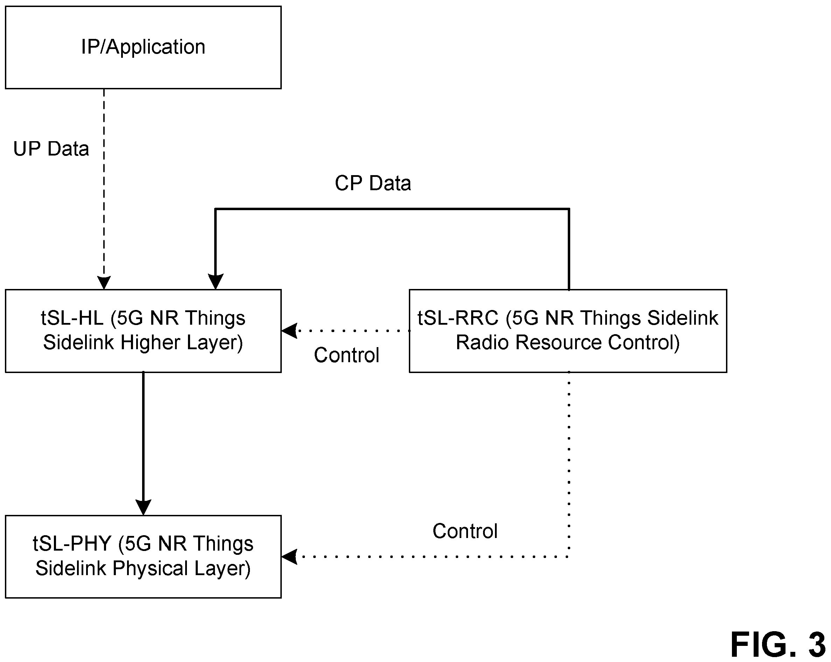

Referring to **FIG. 3**, illustrated is a protocol stack for a tUE-nUE (or tUE-tUE) interface (e.g., the tSL (5G NR Things Sidelink) Xu-s interface discussed herein), according to various aspects described herein. For the UL (uplink) transmission, a CP/UP (control plane/user plane) data packet to be transmitted over the air-interface can be received as a tSL-HL service data unit (tSL-HL SDU) from the IP/host (for user plane data) layer or the 5G NR Things Sidelink-RRC (tSL-RRC) (for control plane data) layer. The tSL-RRC layer can handle the configuration of the tSL-HL. tSL-HL can store the data in a relevant transmission (Tx) Buffer (e.g., UP Tx buffer, CP Tx buffer) until tSL-PHY indicates a UL grant. The tSL-HL can form a tSL-HL packet data unit (tSL-HL PDU) based on the TB size indicated by tSL-PHY. The tSL-HL can then pass the tSL-HL PDU to tSL-PHY for transmission. The data packet tSL-HL SDU can go through several operations during its lifetime in the tSL-HL protocol layer. Functions of the tSL-HL layer can be performed by tSL-HL entities. For a tSL-HL entity configured at the nUE (or at one tUE, for tUE-tUE communication), a peer tSL-HL entity can be configured at the tUE (or the other tUE, for tUE-tUE communication) and vice versa.

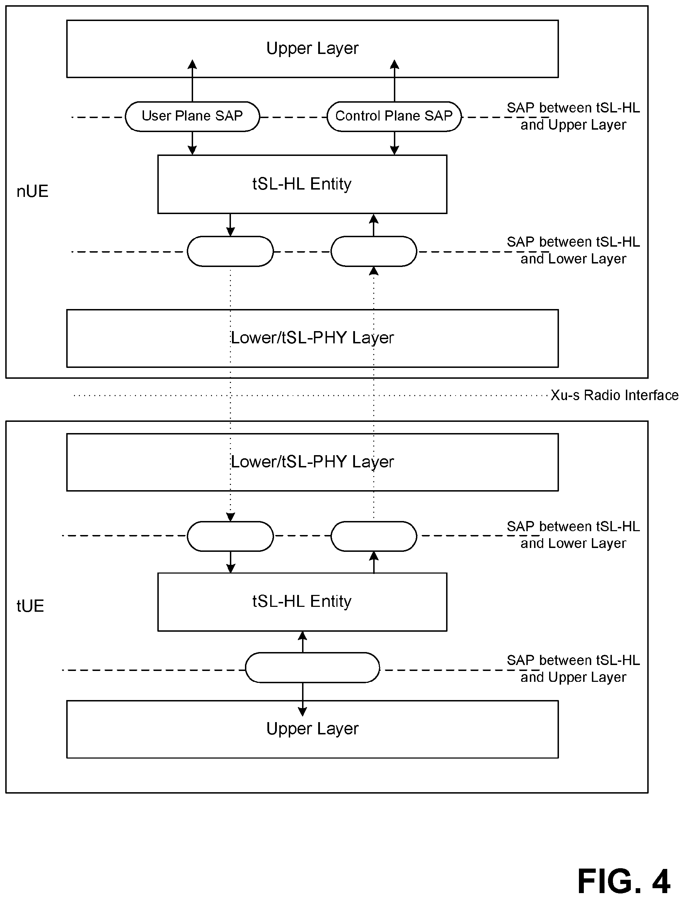

Referring to **FIG. 4**, illustrated is an example diagram showing a functional overview of two peer tSL-HL entities according to various aspects described herein. A tSL-HL entity can receive/deliver tSL-HL SDUs from/to upper layer (e.g., IP/application for UP) and can send/receive tSL-HL PDUs to/from its peer tSL-HL entity via lower layers. Although a tSL-HL PDU can either be a tSL-HL data PDU (e.g., user plane or control plane PDU, or a tSL-HL PDU segment) or a tSL-HL control PDU (e.g. ARQ (automatic repeat request) ACK (acknowledgement)/NACK (negative acknowledgement) Status PDU), various embodiments discussed herein relate to tSL-HL UP data PDUs and/or segments thereof. If a tSL-HL entity receives tSL-HL SDUs from an upper layer, it can receive them through either a user plane SAP (service access point) or a control plane SAP between tSL-HL and the upper layer, and after forming tSL-HL data PDUs from the received tSL-HL SDUs, the tSL-HL entity can deliver the tSL-HL data PDUs or PDU segments to a lower layer (tSL-PHY). When a tSL-HL entity receives tSL-HL data PDUs or PDU segments from the lower layer, after forming tSL-HL SDUs from the received tSL-HL data PDUs and PDU segments, the tSL-HL entity can deliver the tSL-HL SDUs to the upper layer through either the user plane SAP or control plane SAP between tSL-HL and upper layer. A tSL-HL entity can also deliver/receive tSL-HL control PDUs to/from lower layer.

A tSL-HL entity can comprise a transmitting side and a receiving side. The transmitting side of a tSL-HL entity can receives tSL-HL SDUs from an upper layer and can send tSL-HL PDUs to its peer tSL-HL entity via lower layers. The receiving side of a tSL-HL entity can deliver tSL-HL SDUs to an upper layer and can receive tSL-HL PDUs from its peer tSL-HL entity via lower layers.

In general, tSL-HL entities handle tSL-HL SDUs that can have variable sizes and can be byte aligned. Additionally, tSL-HL PDUs can be formed when a tSL-HL entity is notified of a transmission opportunity by a lower layer (e.g., by tSL-PHY), and can then be delivered to lower layer. A control plane PDU can be formed if the transmission opportunity is on one or more control PRAs (Physical Resource Allocations, which can comprise 1 or more PRBs (physical resource blocks)), where the control PRA(s) can be indicated via higher layer signalling, predefined, etc. If the transmission opportunity is not associated with control PRA(s), a user plane tSL-HL PDU can be formed. Various embodiments discussed herein can relate to UP tSL-HL PDUs that can be transmitted via PRA(s) other than control PRA(s) (also referred to herein as non-control PRA(s)).

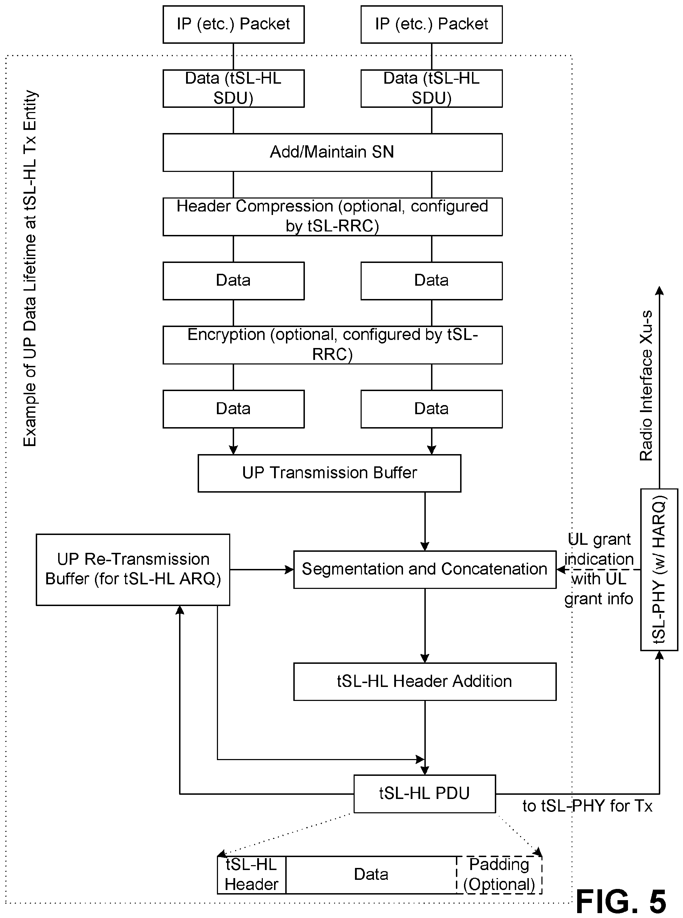

Referring to **FIG. 5**, illustrated is an example flow diagram showing processing details user plane (UP) data may go through at a tSL-HL layer at a transmitting tSL-HL entity according to various aspects described herein. FIG. 5 also shows generation of a PDU to be transmitted on a PRA/resource other than a control PRA (e.g., a user plane data PDU). Some of the functionalities of tSL-HL (e.g., that can be performed by a tSL-HL entity) associated with transmission of user plane data include: (1) maintenance of tSL-HL SNs (sequence numbers); (2) optional (e.g., configured by tSL-RRC) header compression of IP (UP) data flows; (3) optional (e.g., configured by tSL-RRC) ciphering and deciphering of user plane data; (4) in-sequence delivery of upper layer data; (5) duplicate detection and discarding of duplicate tSL-HL SDU(s); (6) tSL-HL SDU discard (e.g., timer based); (7) concatenation, segmentation and reassembly of SDUs (e.g., so that the tSL-HL PDUs fit within the total size of tSL-HL PDU(s) indicated by lower layer at the particular transmission opportunity notified by lower layer); (8) re-segmentation of tSL-HL PDUs (e.g., if the tSL-HL data PDU to be retransmitted does not fit within the total size of tSL-HL PDU(s) indicated by lower layer at a particular transmission opportunity notified by lower layer, the tSL-HL entity can re-segment the tSL-HL data PDU into tSL-HL PDU segments); and (9) protocol error detection and recovery by retransmission at two levels: (a) HARQ (hybrid ARQ (automatic repeat request)) first at the TB level and (b) ARQ (automatic repeat request) at the tSL-HL PDU level. The PDU, which can have a data field formed from tSL-HL SDU(s) received from upper layer or tSL-HL PDU segments from tSL-HL data PDUs to be retransmitted, can have a header that can include relevant sub-headers based on the SDU(s) and/or PDU segments of the data field.

Header compression and decompression can provide optional functionality for user plane data. Header compression at the transmitting side of a tSL-HL entity can be configured by upper layer for the user plane data. If header compression is enabled at the transmitting side, a header decompression procedure can be performed at the receiving side of the tSL-HL entity.

The Ciphering function is also optional and can be configured and activated by upper layer for user plane and control plane data. The Ciphering function can include both ciphering and deciphering. For the control plane, the data unit that can be ciphered is the data part (tSL-HL SDU and SDU SN) and the integrity protection part. For the user plane, the data unit that can ciphered is the data part (tSL-HL SDU and SDU SN).

The Ciphering function can be activated by upper layers and the Ciphering algorithm and key to be used can be configured by upper layer. After security activation, the ciphering function can be applied to all tSL-HL PDUs indicated by upper layers. Ciphering and deciphering can be performed after Integrity protection and verification for control plane data.

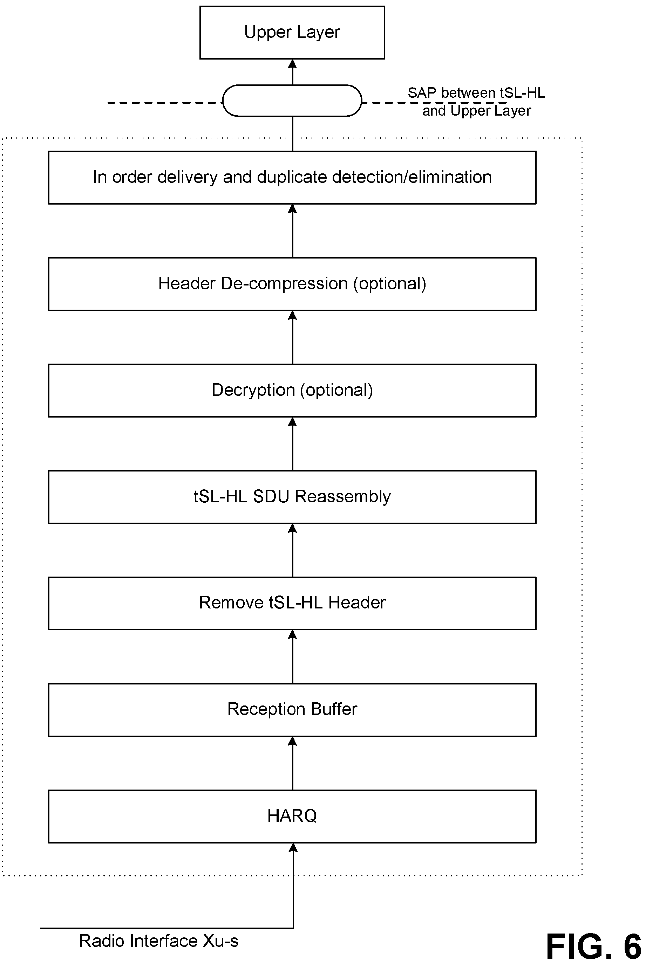

Referring to **FIG. 6**, illustrated is an example flow diagram showing processing details user plane (UP) data may go through at a tSL-HL layer at a receiving tSL-HL entity according to various aspects described herein. Some of the functions of tSL-HL associated with reception of UP data include: (1) Reassembly of tSL-HL PDU(s) in case of PDU segmentation; (2) Detection of whether or not the tSL-HL data PDUs have been received in duplicate, and discarding duplicated tSL-HL data PDUs; (3) Reordering the tSL-HL data PDUs if they are received out of sequence; (4) Detecting the loss of tSL-HL data PDUs at lower layers and requesting retransmission(s) to the peer tSL-HL entity; and (5) Reassembling tSL-HL SDUs from the reordered tSL-HL data PDUs and delivering the tSL-HL SDUs to upper layer in sequence. When tSL-HL is reestablished, the receiving side of a tSL-HL entity can: (1) If possible, reassemble tSL-HL SDUs from the tSL-HL data PDUs that are received out of sequence and deliver them to the upper layer; (2) Discard any remaining tSL-HL data PDUs that could not be reassembled into tSL-HL SDUs; and (3) Initialize relevant state variables and stop relevant timers (e.g., such as those discussed herein).

In various embodiments discussed herein, a tSL-HL can be employed that was based on the following design choices for guiding UP data processing at tSL-HL. First, an implicitly/explicitly known separate PRA/resource (referred to herein as control PRA) can be employed for the transmission of control plane data. In various aspects, control plane data is transmitted solely on the control PRA, and other PRAs can be employed for user plane data transmission. A PRA (Physical resource Assignment) is the basic unit of physical resource allocation of a resource block, and is defined in terms of a number of PRBs (Physical Resource Blocks). For example, 1 PRA can be defined as 1 PRB, 2 PRBs, 3 PRBs or 6 PRBs (etc.), where a PRB can comprise 156 REs (resource elements), with 12 subcarriers and 13 OFDM symbols. Each PRB can also have 5 guard periods (GP) equivalent to 1 symbol. Thus, a PRB can comprise 12 subcarriers and 14 symbols (including GP) or 13 symbols excluding GP.

Second, the power headroom report (PHR) and buffer status report (BSR) can be piggybacked in a tSL-HL PDU transmitted on control PRA, and thus separate from UP data according to various aspects described herein.

Third, since various aspects discussed herein relate to creating a tSL-HL PDU based on an UL Transmission buffer and/or an UL Retransmission buffer and can omit BSR, PHR, and CP data, a Multiplexing and Assembly operation need not be employed for tSL-HL user plane data. In various aspects, a simple flag bit(s) can be included to indicate whether a data field is from the Transmission buffer or the Retransmission buffer.

Referring to **FIG. 7**, illustrated is a block diagram of a system 700 that facilitates a higher layer for 5G NR Things sidelink communication (tSL-HL) at a UE (e.g., network UE (nUE) or 5G NR Things UE (tUE)), according to various aspects described herein. System 700 can include one or more processors 710 (e.g., one or more baseband processors such as one or more of the baseband processors discussed in connection with FIG. 1), transceiver circuitry 720 (e.g., comprising one or more of transmitter circuitry or receiver circuitry, which can employ common circuit elements, distinct circuit elements, or a combination thereof), and a memory 730 (which can comprise any of a variety of storage mediums and can store instructions and/or data associated with one or more of processor(s) 710 or transceiver circuitry 720). In various aspects, system 700 can be included within a user equipment (UE), either in a 5G NR Things UE (tUE, e.g., a wearable tUE, etc.) or in a network UE (nUE). As described in greater detail below, system 700 can provide higher layer functionality for user plane messaging between a network UE (nUE) and one or more 5G NR Things UEs (tUEs) within a personal area network (PAN).

Processor(s) 710 can implement a 5G NR Things Sidelink higher layer (tSL-HL) that can perform higher layer functionalities associated with user plane messaging exchanged between a tUE and a nUE or between two tUEs. In embodiments discussed herein, such higher layer functionality (e.g., functionality of layer(s) between an upper (e.g., IP, application, etc.) layer and tSL-PHY (the physical layer)) can be implemented by processor(s) 710 via a single layer, referred to herein as tSL-HL (5G NR Things sidelink higher layer), in contrast to conventional LTE systems, which employ three layers (MAC, RLC, and PDCP). In various aspects, processor(s) 710 can implement functions associated with a tSL-HL transmission (Tx) entity and/or functions associated with a tSL-HL reception (Rx) entity.

In tSL-HL Tx aspects, processor(s) 710 can implement one or more functions associated with a tSL-HL Tx entity, such as any of the acts shown or described herein (e.g., in connection with FIG. 5, etc.). For example, processor(s) 710 can receive one or more upper layer (e.g., IP or application layer, etc.) UP (user plane) packets as tSL-HL SDU (service data unit) packets. Processor(s) 710 can assign a distinct sequence number (SN) to each of the tSL-HL SDU(s). Optionally, processor(s) 710 can apply header compression and/or encryption (ciphering) to the tSL-HL SDU(s), either or both of which can be configured via a tSL-RRC layer. Processor(s) 710 can add the tSL-HL SDU(s) (e.g., IP layer, etc. UP packets) to a UP transmission buffer (e.g., at a nUE or tUE).

Processor(s) 710 can determine a physical resource assignment (PRA) and corresponding allocation size for transmission of a tSL-HL PDU (protocol data unit) via tSL-PHY (the physical layer) by transceiver circuitry 720. In tUE aspects, the PRA can be indicated via an UL grant (e.g., from the nUE) and can be a non-control PRA (e.g., a PRA other than one or more PRAs that can be designated for CP messaging).

Based on the PRA and allocated size, processor(s) 710 can generate a tSL-HL PDU, which can comprise one or more tSL-HL SDUs or segments thereof from the UP Tx buffer (e.g., wherein processor(s) 710 can perform segmentation as appropriate based on the allocated size), and/or one or more tSL-HL PDUs or segments thereof from a UP retransmission buffer (e.g., wherein processor(s) 710 can perform re-segmentation as appropriate based on the allocated size). Both of the UP retransmission buffer and the UP Tx buffer can have an associated priority, which in some aspects can be prioritized in that order (e.g., UP retransmission buffer having a higher priority than UP Tx buffer, etc.). For an allocation size sufficient to include multiple data fields in the tSL-HL PDU, processor(s) 710 can include data fields based on the associated priorities (e.g., including one or more tSL-HL PDUs or segments thereof from a UP retransmission buffer, and when the allocated size is sufficient, also including one or more tSL-HL SDUs or segments thereof from the UP Tx buffer). In some aspects, processor(s) 710 can add padding to the tSL-HL PDU to match the size of the tSL-HL PDU to the allocation size.

Processor(s) 710 can add a tSL-HL packet header to the tSL-HL PDU generated as described herein, which, depending on the data content of the tSL-HL PDU, can comprise one or more sub-headers indicating the contents of the tSL-HL PDU. Each data field can be associated with a distinct sub-header of the tSL-HL packet header, which can indicate information associated with that data field, which can include the type of data (e.g., whether that data field is a PDU, a SDU, a segment, which can include a flag that indicates whether that data field is from the UP Tx buffer or the UP retransmission buffer, etc.), an identifier of the data (e.g., one or more of a SDU SN, a segment number for a segment, a start offset for a resegment, etc.), a length of the data (e.g., via a length indicator as discussed herein), etc.

Processor(s) 710 can pass the tSL-HL PDU with header to tSL-PHY for transmission by transceiver circuitry 720 via the PRA.

Processor(s) 710 can employ a two-level retransmission mechanism in connection with the tSL-HL PDU(s).

Processor(s) 710 can employ a HARQ (Hybrid Automatic Repeat reQuest) mechanism at the physical layer TB level, which can involve processor(s) 710 processing HARQ ACK feedback (e.g., ACK (acknowledgement) or NACK (negative acknowledgement)) received via transceiver circuitry 720 in response to TBs used to communicate the tSL-HL PDU via tSL-PHY. In response to NACK(s), processor(s) 710 can retransmit the TB(s) one or more times unless a HARQ retransmission limit has been reached.

Processor(s) 710 can also employ an ARQ (Automatic Repeat reQuest) mechanism at the tSL-HL UP PDU level, which can involve processor(s) 710 processing ARQ ACK feedback (e.g., ACK (acknowledgement) or NACK (negative acknowledgement)) received via transceiver circuitry 720 in response to tSL-HL PDU(s) via tSL-PHY. In response to NACK(s), processor(s) 710 can pass the tSL-HL PDU to tSL-PHY for retransmission one or more times (e.g., which can involve re-segmentation, etc.) unless an ARQ retransmission limit has been reached. In processing the tSL-HL PDU to be passed to tSL-PHY again, processor(s) 710 can re-determine a PRA and allocated size for the tSL-HL PDU (e.g., based on a new UL grant, etc.). Depending on the allocated size for the tSL-HL PDU, this can involve processor(s) 710 generating a new tSL-HL PDU with data fields that include the prior tSL-HL PDU along other data (e.g., other UP data or segments thereof from the UP retransmission buffer and/or Tx buffer, etc.) and/or processor(s) 710 re-segmenting the tSL-HL PDU.

In tSL-HL Rx aspects, processor(s) 710 can implement one or more functions associated with a tSL-HL Rx entity (e.g., at a nUE or a tUE), such as any of the acts shown or described herein (e.g., in connection with FIG. 6, etc.). For example, processor(s) 710 can generate HARQ ACK feedback (e.g., ACK/NACK, etc.) that can be transmitted by transceiver circuitry 720 in response to TB(s) successfully or unsuccessfully received by transceiver circuitry 720 in connection with one or more tSL-HL PDUs. Processor(s) 710 can generate the tSL-HL PDU(s) based on the TB(s) received by transceiver circuitry 720. Processor(s) 710 can also generate ARQ ACK feedback (e.g., ACK/NACK, etc.) that can be transmitted by transceiver circuitry 720 in response to tSL-HL PDU(s) successfully or unsuccessfully reconstructed by processor(s) 710. In nUE aspects, processor(s) 710 can generate (and transceiver circuitry 720 can transmit) UL grant(s) that indicate PRA(s) and allocated size(s) that the tSL-HL PDU(s) are received via.

Processor(s) 710 can provide the generated tSL-HL PDU(s) from tSL-PHY to tSL-HL for higher layer processing by processor(s) 710. As discussed herein, individual tSL-HL PDU(s) can comprise at least one data field, wherein each data field can be: an upper layer UP packet (e.g., tSL-HL SDU such as an IP packet, etc.) or a segment thereof, or a tSL-HL PDUs from a retransmission buffer or a segment or a re-segment thereof. For tSL-HL PDU(s) that comprise one or more data fields, the header(s) of the tSL-HL PDU(s) can comprise one or more subheaders, which can indicate information associated with each of the one or more data fields. Processor(s) 710 can detect whether there are any duplicate tSL-HL PDU(s), and if so, discard any duplicate tSL-HL PDU(s).

From the tSL-HL PDU(s), processor(s) 710 can generate one or more tSL-HL SDUs (e.g., upper layer UP packet(s)). From the header(s) of the tSL-HL PDU(s) and SN(s) (and for segments or re-segments, segment number(s) or start offset(s)) indicated therein, processor(s) 710 can determine an ordering of the SDU(s) (upper layer UP packet(s)). Processor(s) 710 can optionally apply decryption and/or header decompression to any tSL-HL SDU(s) for which encryption and/or header compression was applied. Processor(s) 710 can also discard duplicate SDU(s) if any (e.g., as determined by SN(s) of the SDU(s)), and deliver the distinct (e.g., non-duplicate) SDU(s) (e.g., IP, etc. packet(s)) in order to an upper layer (e.g., IP or application layer, etc.).

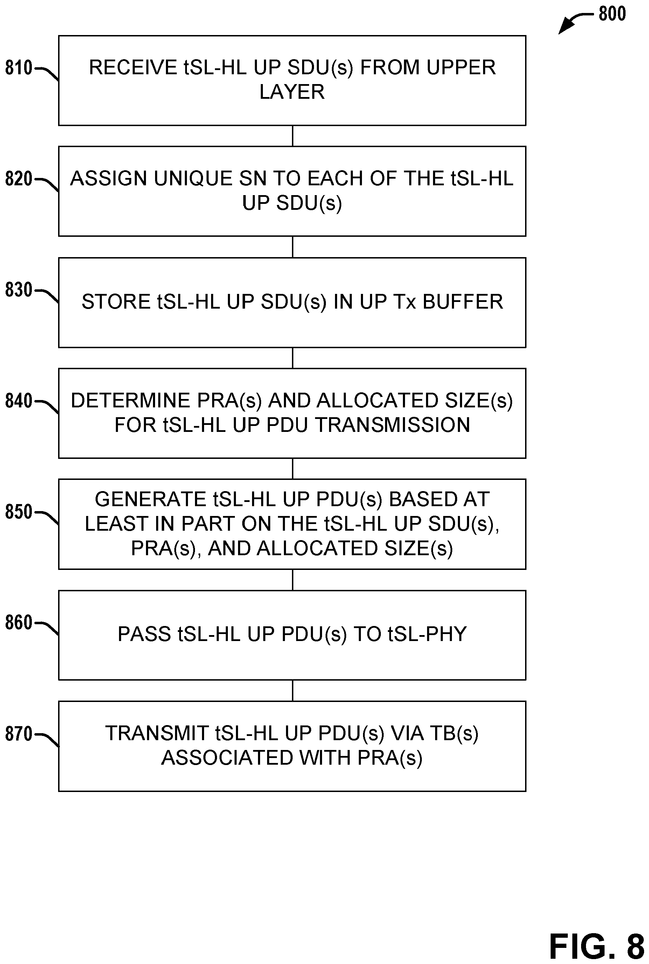

Referring to **FIG. 8**, illustrated is a flow diagram of a method 800 that facilitates generation of a tSL-HL PDU from one or more upper layer UP packets, according to various aspects described herein. In some aspects, method 800 can be performed at a UE (e.g., nUE or tUE). In other aspects, a machine readable medium can store instructions associated with method 800 that, when executed, can cause a UE (e.g., nUE or tUE) to perform the acts of method 800.

At 810, one or more tSL-HL UP SDUs can be received from an upper layer.

At 820, a unique SN can be assigned to each of the one or more tSL-HL UP SDUs.

At 830, the one or more tSL-HL UP SDUs can be stored in a UP Tx buffer.

At 840, one or more PRAs and allocated sizes can be determined for transmission of one or more tSL-HL UP PDUs.

At 850, the one or more tSL-HL UP PDUs can be generated based at least in part on the PRA and allocated size, the UP Tx buffer, or an UP retransmission buffer.

At 860, the tSL-HL UP PDU(s) can be passed to tSL-PHY.

At 870, the tSL-HL UP PDU(s) can be transmitted via one or more TBs associated with the one or more PRAs.

Additionally or alternatively, method 800 can include one or more other acts performed by a tSL-HL Tx entity described above in connection with system 700.

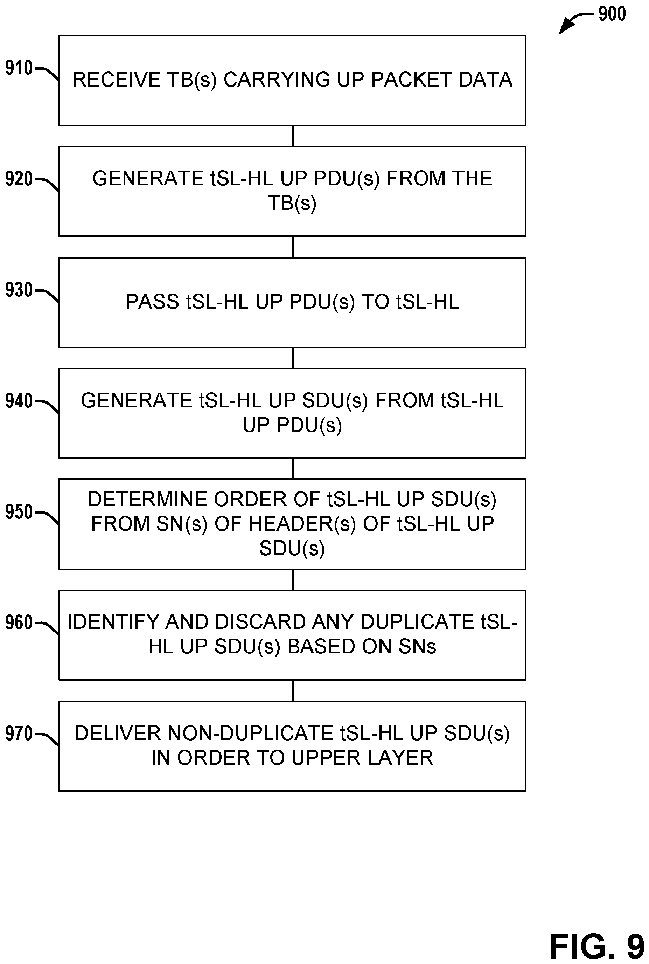

Referring to **FIG. 9**, illustrated is a flow diagram of a method 900 that facilitates generation and in-order delivery of one or more upper layer UP packets from one or more received TBs, according to various aspects described herein. In some aspects, method 900 can be performed at a UE (e.g., nUE or tUE). In other aspects, a machine readable medium can store instructions associated with method 900 that, when executed, can cause a UE to perform the acts of method 900.

At 910, one or more TBs can be received carrying UP packet data.

At 920, one or more tSL-HL UP PDUs can be generated from the one or more TBs.

At 930, the one or more tSL-HL UP PDUs can be passed to a tSL-HL for further processing.

At 940, one or more tSL-HL UP SDUs (e.g., IP packet(s), etc.) can be generated from the one or more tSL-HL UP PDUs.

At 950, based on a SN of a header of each of the one or more tSL-HL UP PDUs, an ordering of the one or more tSL-HL UP SDUs can be determined.

At 960, any duplicate tSL-HL UP SDU(s) can be identified (e.g., as determined by SNs of the SDUs) and discarded.

At 970, the non-duplicate tSL-HL UP SDU(s) can be delivered in order to the upper layer.

Additionally or alternatively, method 900 can include one or more other acts performed by a tSL-HL Rx entity described above in connection with system 700.

### User Plane Packet Processing at tSL-HL:

The following details can be employed for packet processing and header additions for user plane data in connection with a tSL-HL as described herein. User plane packet processing can include generation of (a) User Plane tSL-HL protocol data unit(s) (UP tSL-HL PDU(s)) and/or (b) UP tSL-HL PDU segment(s). A UP tSL-HL PDU can be used to transfer user plane data from an upper layer. Any grant indication from a lower (physical) layer on a non-control PRA can initiate creation of a UP tSL-HL PDU from UP SDU(s) and/or UP SDU segments. A UP tSL-HL PDU can be used when the tSL-HL entity transmits all or part of the tSL-HL SDU for the first time, or when the tSL-HL entity retransmits an UP tSL-HL PDU without having to perform re-segmentation. A UP tSL-HL PDU segment can be used when the tSL-HL entity retransmits a portion of a UP tSL-HL PDU.

When tSL-HL receives a packet from a higher layer (such as IP layer), the packet can become a tSL-HL SDU (service data unit) for the tSL-HL protocol layer.

A sequence number (SN) can be added per tSL-HL SDU (to save header overhead, a SN per tSL-HL PDU can be omitted). Encryption (ciphering/deciphering) is frequently done per SDU and a SDU SN is used for these operations, thus a sequence number (SN) can be added per tSL-HL SDU.

If tSL-HL SDU is an IP packet and header compression is enabled by tSL-RRC, tSL-HL can perform header compression. Otherwise, tSL-HL SDU can skip header compression. Header compression can reduce the size of the tSL-HL SDU.

If encryption is enabled, tSL-HL SDU can go through a ciphering operation which adds security to the air-interface transmission. Ciphering does not change the size of the tSL-HL SDU.

The tSL-HL SDU (optionally with header compression and/or ciphering) can be placed in a UL Transmission buffer along with its assigned SN. Note that the tSL-HL header can be added only when tSL-HL PDU is generated upon request from tSL-PHY layer. tSL-PHY can ask for a tSL-HL PDU when an UL grant is received. Buffering of the tSL-HL SDU in the UL transmission buffer of a tUE can trigger sending scheduling request to nUE in order to request an UL grant.

Once an UL grant is received at tSL-PHY, tSL-PHY can pass the UL grant to tSL-HL, asking to provide a tSL-HL PDU for transmission. The tSL-HL PDU size can be equal to the tSL-PHY transport block (TB) size to be included in the received UL grant.

tSL-HL can then generate a tSL-HL PDU from the tSL-HL SDUs buffered in UL Tx buffer (and/or a UL ARQ Retransmission buffer). Based on the grant size, tSL-HL can: segment an SDU from the UL Tx buffer; Re-segment a tSL-HL PDU from the UL ARQ Retransmission buffer; combine one or more SDU segments; combine 1 or more SDUs; and/or Combine 0 or more re-segments, 0 or more segments and 0 or more SDUs. The value 0 indicates that the specific field can be omitted from some PDUs. That is, all these fields do not always need to be present.

tSL-HL can add a packet header to create a tSL-HL PDU. Examples of packet header additions and their details are discussed below. tSL-HL can store a copy of the tSL-HL PDU in the UL ARQ Retransmission buffer. tSL-HL can pass the tSL-HL PDU to tSL-PHY for transmission.

tSL-PHY can transmit the tSL-HL PDU one or more times until either it is received successfully at nUE or a maximum number of HARQ retransmissions limit is reached.

If the receiving UE (e.g., nUE or tUE) is unable to successfully receive tSL-HL PDU in maximum HARQ retransmission tries, tSL-HL can invoke the ARQ (automatic repeat request) retransmission procedure.

During ARQ retransmission, the original tSL-HL PDU can be re-segmented if the new grant size is smaller or it can be combined with other segment(s)/SDU(s) if the new grant size is bigger. For each ARQ retransmission, tSL-PHY can try the maximum number of HARQ retransmission tries to deliver the PDU.

After a Maximum number of ARQ retransmission tries, if a PDU fails to be successfully received at the receiving UE, the tSL-HL can discard the associated SDU and can inform the higher layer (the protocol layer above tSL-HL) about it.

### Higher Layer (tSL-HL) packet Header Design and Optimization for UP data: Features and proposals for design of packet header at tSL-HL:

In various embodiments, the following details of packet header addition can be employed at the tSL-HL layer in creation of a tSL-HL PDU.

A sequence number (SN) can be assigned per tSL-HL SDU (in order to reduce packet header overhead, a SN need not be assigned per tSL-HL PDU). Usually Encryption is done per SDU and a SDU SN is used for this operation, thus a sequence number (SN) can be added per tSL-HL SDU.

In various aspects, a SN per PDU can be omitted to reduce packet header overhead in a tSL-HL PDU.

If retransmission is to be performed at the tSL-HL level (such as if tSL-HL ARQ is enabled), it can be done per tSL-HL PDU. In the absence of a SN per tSL-HL PDU, another tag (a unique ID) can be used to identify each PDUs so that the tSL-HL Rx (Receive) entity can send the PDU Identification tag (unique ID) to the tSL-HL Tx (Transmit) entity while requesting a retransmission of missing PDU. For each case of tSL-HL PDU, tags are provided herein which can be used to identify each PDU. In many scenarios, a SDU SN or a SDU SN plus a Segment ID can be used as tag/ID to uniquely identify any tSL-HL PDU, as described shortly in subsequent sections.

As discussed elsewhere herein, the L1/tSL-PHY transport block can be limited to a few tens of Bytes (e.g., less than 75 Bytes) due to the contention based transmission environment over the Xu-s interface. A smaller L1 TB size can be helpful in reducing the performance impact from potential collision. Table 1 below shows an example L1/tSL-PHY TB size range. In the example of table 1, the maximum PDU (or UP PDU) size is approximately 600 bits (75 Bytes) and the minimum is 176 bits (22 Bytes). The example of table 1 is used in the following discussion, although other sizes can be employed, with corresponding changes in various details.

**Table 1: An example showing TB Size range for tSL.**

| | TB Sizes (bits) | TB Sizes (Bytes) |
|---|---|---|
| Min. | 176 | 22 |
| Max. | 600 | 75 |

Length Indicator (LI): To represent a length (in Bytes) up to 75 Bytes, a Length Indicator (LI) = 7 bits can be employed. Seven bits are sufficient to specify a length up to 127 (2^7 - 1) Bytes.

Size of Sequence Number (SN): The SN size can be sufficient to provide for a a unique SN for each SDU. For an example maximum number of TBs per TTI (transmission time interval) per tUE of 100, at least 100 SNs can cover the worst case when there will be small SDUs, with one fitting a TB. To cover retransmission, a maximum number of HARQ Retransmissions can be allowed, for example, up to 8. Thus, in that example, 800 SNs can cover the worst case scenario. For 800 SNs, 10 bits can be used to represent SNs. Table 2 provides other examples showing the number of bits that can be employed to provide a unique SN to each SDN.

**Table 2: An example showing number of bits for SN for tSL-HL SDUs.**

| Max HARQ Retrans# | Max number of TBs per TTI per tUE | Min. SNs for Worst Case | No of bits for SN |
|---|---|---|---|
| 2 | 100 | 200 | 8 bits |
| 3 | | 300 | 9 bits |
| 4 | | 400 | 9 bits |
| 8 | | 800 | 10 bits |

Number of bits to represent a Segment of a SDU: The number of bits to represent a Segment of a SDU depends on the maximum size of SDU that can be received at tSL-HL. The maximum supported PDCP SDU size in conventional LTE is 8188 Bytes. However, most of the time, IP packet size is less than or equal to 1500 Bytes. Based on these possible two maximum SDU sizes, the segment ID can be designed. There are two way to represent a segment: (1) specifying Start/End Byte within the SDU for the segment, which uses 13 bits (for a maximum SDU Size = 8188 Byte) or 11 bits (for a maximum SDU Size = 1500 Byte), or (2) specifying a Segment number using 9 bits (for a maximum segment # of 8188/22 = 373) or 7 bits (for a maximum segment # of 1500/22 = 69). It is more efficient to specify the segment Number as a segment id, as the segment number uses a lower number of bits. However, it adds some processing complexity at the tSL-HL layer, for the tSL-HL layer to remember the Segment start/end bytes locally for each segment.

Higher Priority for Retransmission: Re-transmission data can have a higher priority than new transmission data. In various embodiments, Re-segmented data can be the first data segment(s)/field(s) if an UL grant is available in a TTI expecting HARQ/ARQ retransmission.

Separation of PRA for Control Data and User Plane Data: one or more PRAs can be implicitly/explicitly designated as control PRA(s). Control data can be transmitted solely on these PRAs. PHR and BSR can be piggybacked in the tSL-HL PDU on the control PRA(s) if PHR/BSR transmission is triggered or otherwise to be sent. Also, user plane data can be included in the tSL-HL PDU for the control PRA if there are resources left after finishing CP data. A 1 bit flag (e.g., PDU Type) can be included to identify tSL-HL PDU for control PRA(s) versus UP PRA(s).

### Packet Header Optimization in case of Re-segmentation of a tSL-HL PDU during ARQ Retransmission

During ARQ retransmission, if nUE provides a grant equal to tSL-HL PDU (previous TB size), re-segmentation need not be employed. However, the grant may be of smaller size, and in that case a PDU (original PDU) in the retransmission buffer can be re-segmented. When the original PDU is re-segmented, all its re-segments can have an ID to help the tSL-HL Rx entity to recreate the original PDU and also to request retransmission of lost re-segment(s). If some re-segments of the original PDUs are lost, the missed re-segments can be sent without the received re-segments. During retransmission of a re-segment, it can potentially be segmented again to fit the grant, which can be referred to as a second level of re-segmentation. In general, there might be multiple levels of resegmentation. For the tSL-HL Tx and Rx entities, managing IDs of multiple levels of resegmentation and buffering multiple levels of resegmented data could take additional processing resources and buffering.

In various aspects, To simplify the processing (at the tSL-HL Rx/Tx entities) and to save buffering for ARQ retransmission, only the original tSL-HL PDUs can be stored/buffered in retransmission buffer. If a re-segmentation of an original PDU (in retransmission buffer) is to occur (e.g., due to smaller grant size), the retransmission packet header can be added in such a way that each segment (of re-segmentation) can be identified uniquely and can be recreated from the original tSL-HL PDU if a segment (of re-segmentation) is to be retransmitted.

In the example design discussed herein, a tSL-HL PDU can have a maximum size of up to 75 Bytes. For resegmentation of tSL-HL PDU during ARQ retransmission, stating the Start offset in Byte for a resegment is efficient, as it can be specified via only 7 bits. Therefore, a segment (of re-segmentation) can have an ID to identify the original PDU and a start offset in Bytes within the original PDU as described herein. To make the decoding easier at tSL-HL Rx entity, a flag can also be included indicating whether this segment is the last segment or not.

Rseg-SO (7 bits): Resegmentation Start Offset can specify the Start Byte of the original PDU (Original Header + Original Data fields) for a given resegment, that is, the starting Byte number in the original PDU carried in this Re-segment while performing resegmentation during ARQ re-transmission of a PDU. Note that for retransmission the whole PDU (the original Header + original data fields) can be considered as a data field to specify the start offset of a resegment. For the example maximum PDU size of 600 bits (75 bytes), 7 bits (which covers up to 128 Bytes length), is sufficient to represent the start offset in the original PDU.

RSeg-SN (10 Bits): During Re-transmission, each original PDU can be identified, so that the PDU identification tag (PDU ID) can be used in its re-segmentation. Example PDU identification tags (PDU IDs) are discussed for various cases below. The PDU identification (PDU ID) can have a SDU SN (10 bits) only or a SDU SN with Segment number (10+9 bits) from the original PDU in various embodiments. A Resegmentation PDU tag id called Resegment Sequence Number (Rseg-SN) of 10 bits can be transmitted in the header during ARQ retransmission if resegmentation is employed. The tSL-HL Tx entity can maintain a table with mapping of Rseg-SN versus the original PDU identification Tag (PDU ID) temporarily so that the Tx entity can create any remaining resegments for future grants. Note that the tSL-HL Tx entity need not provide this mapping table information to the tSL-HL Rx side. After collecting all resegments for a Rseg-SN, the Rx side can extract the original packet. The original packet extracted at the Rx side will have the original header and original data fields. Thus, the Rx side can get the SN or SN plus Seg-N from the original header.

### User Plane packet Header design for tSL-HL data processing:

### Various fields of Packet Header

The following examples present packet Header designs for UP data that can be employed for various cases, along with PDU identification tags (PDU IDs) for each case. Table 3, below, provides example fields that can be included in a packet header of a UP tSL-HL PDU, which can facilitate efficient segmentation and concatenation of SDU(s), SDU-segment(s) and/or tSL-HL PDU-Resegment(s).

**Table 4: Description of Various Example Parameters related to subheaders of UP tSL-HL PDU generation for new transmission and/or retransmission:**

| **Header field** | **Header field Value** | **Header field Description** |
|---|---|---|
| ***R (1 bit)*** | 0 | Reserved for future use |
| ***PDU Type (2 bit)*** | | PDU Type indicates what type of PDU it is. |
| | 00 | User plane Data PDU for UP PRAs; |
| | 01 | PDU for Control PRAs |
| | 10 | tSL-HL Internal Control PDU |
| | 11 | Reserved for future use |
| ***E (1 bit)*** | 0/1 | Extension bit. |
| | | 0 = No more data field after this data field. |
| | | 1 = There is at least one more data field after the data field related to this subheader |
| ***Content-Type (3 bits for PDU-Type =00)*** | | Indicates content type (SDU/SDU Segment/PDU/PDU Segment and first, middle or last segment flag) in the related data field. |
| | 000 | tSL-HL PDU from retransmission buffer - NOT resegmented |
| | 001 | A segment of a resegmented tSL-HL PDU from retransmission buffer -PDU resegmented - NOT Last Segment |
| | 010 | The LAST segment of a resegmented tSL-HL PDU from retransmission buffer -PDU resegmented -Last Segment |
| | 011 | tSL-HL SDU from UL TX buffer - NOT Segmented |
| | 100 | A segment of a segmented tSL-HL SDU from UL TX buffer -SDU segmented - NOT Last Segment |
| | 101 | The LAST segment of a segmented tSL-HL SDU from UL TX buffer - SDU segmented - Last Segment |
| | 110 | Padding |
| | 111 | Reserved for future use |
| ***LI (7 bits or more)*** | 0 to 127 | Length Indicator. Specifies length in Byte of the associated data field. LI can be of 7 bits or more bits which is configured by higher layer (e.g. tSL-RRC). |
| ***SN (10 bits)*** | 0 to 1023 | Sequence number assigned to each UP tSL-HL SDU. |
| ***Seg-N (9 or 7 bits)*** | 0 to 511 (9 bits) | Segment Number of a SDU Segment. A segment of a tSL-HL SDU is uniquely identified by SN and Seg-N. |
| | 0 to 127 (7 bits) | |
| ***Rseg-SO (7 bits)*** | 0 to 127 | Re-segmentation Start Offset in Byte. Used for segmentation of a UP tSL-HL PDU during ARQ Retransmission. |
| | | Start Byte in the original PDU (Original Header + Original Data fields) contained in this segment. |
| ***RSeg-SN (10 Bits)*** | 0 to 1023 | Resegmentation Sequence Number. An Id which uniquely identify an original tSL-HL PDU during Retransmission. A segment (of segmented tSL-HL PDU) is uniquely identified by Rseg-SN and Rseg-SO |
| ***Pad*** | Variable number of 0s | Padding. Used to make a PDU header/subheader Byte aligned |

Length Indicator: when there is more than one SDUs/SDU-Segments/PDU-Resegments in a tSL-HL field, the corresponding subheader fields for all data fields except the last data field can have a length indicator field. There is one case (called Padding at the end) when the last data field can also have length field as described in next Section.

### Procedure to adjust tSL-HL PDU to match its size with the allocated Grant

When tSL-PHY/L1 (Layer 1) indicates to provide a PDU of a specific size, tSL-HL can make sure it provides the tSL-HL PDU of exactly the same size as indicated by L1. The L1 transport block size (i.e. grant size for tSL-HL PDU generation indicated by L1) can be assumed to be Byte aligned. As described below, padding can be used to match the size of tSL-HL to the grant size.

Padding: There can be cases when only a few bytes (e.g., 1, 2, 3 or 4 Bytes, etc.) of grant is left over after including 0 or more SDUs/SDU-Segments/PDU/PDU-Segment while preparing the tSL-HL data PDU.

In some situations, the leftover grant after generating a PDU may not be sufficient to include a new subheader and a corresponding data field of at least one Byte. In another case, there is not sufficient data to fill the grant and large padding (several Bytes, e.g., more than 4 Bytes) can be used to fill the grant. In such cases, padding can be added as follows.

In a first scenario, only one or two Byte(s) of UL Grant can be left over. In such a scenario, one (or two) padding sub header(s) of 1 Byte (each) can be added at the beginning. Each padding subheader can be separately made byte aligned by adding 0 or more padding bits at the end of each subheader in such a situation. The last SDU/SDU-Segment/PDU/PDU-Segment subheader need not have an LI field as it is still the last data field. The receiving side (tSL-HL Rx entity) can ignore the padding subheader(s) as if these byte(s) did not exist when the tSL-HL Rx entity finds padding subheader(s) at the beginning of the PDU header during decoding.

In a second scenario, three or more Bytes of Grant can be left over. In such a case, there is sufficient grant to add a LI field to the last SDUs/SDU-Segments/PDU/ PDU-Segment subheader (of the tSL-HL PDU as constructed before padding) and to add a padding subheader at the end. The padding subheader at the end can indicate that after the last SDUs/SDU-Segments/PDU/PDU-Segment data field (which has an LI for it included in the relevant subheader), the remaining grant can be filled with padding. The padding data field in this situation can be 0 or more bytes. The receiving side (tSL-HL Rx entity) can ignore the remaining part (the padding part) while decoding.

If there is no data to transmit (or retransmit) or no data byte (and the related header can be accommodated in the allocated grant), one of the following options can be employed: (1) if possible, the grant can be ignored; (ii) if a PDU is going to be created, then a padding subheader followed by 0 or more padding bits can be added to create an exclusive padding PDU.

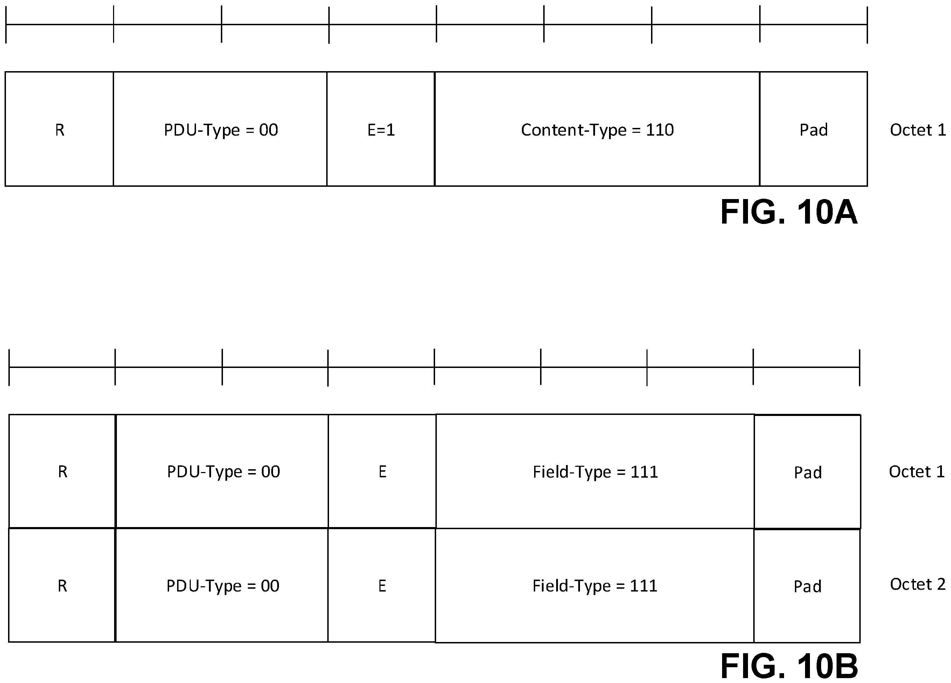

Referring to **FIG. 10A**, illustrated is an example of a padding subheader that can be added at the beginning of a UP tSL-HL PDU when only one byte of padding can be added to fill the remaining grant, according to various aspects described herein. Referring to **FIG. 10B**, illustrated is an example of a padding subheader that can be added at the beginning of a UP tSL-HL PDU when two bytes of padding can be added to fill the remaining grant, according to various aspects described herein.

### Various Example cases of tSL-HL Header Generation

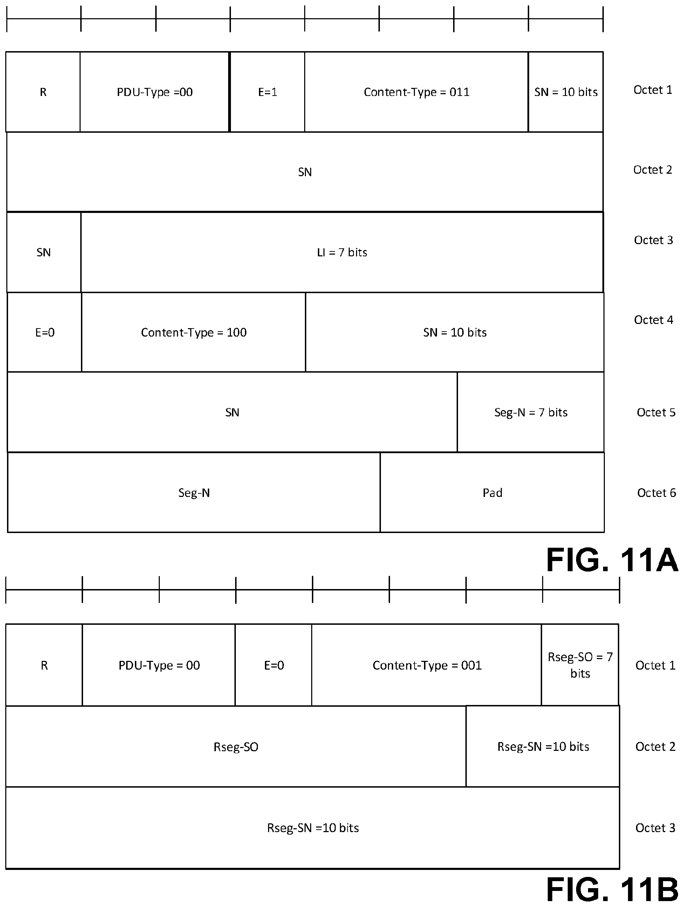

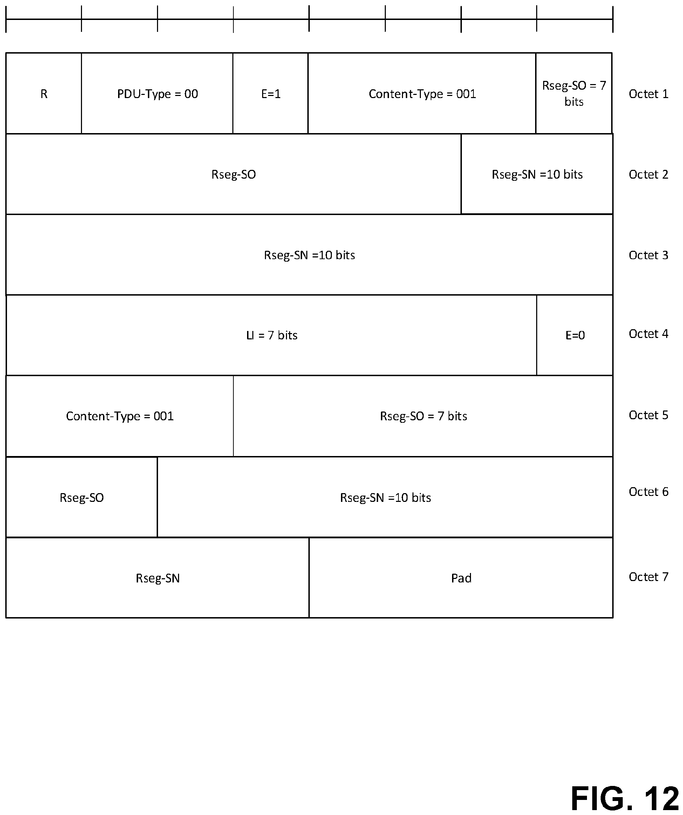

tSL-HL PDU can be a bit string. Referring to **FIG. 11A**, illustrated is an example of a portion of a header for a UP tSL-HL PDU for new transmission that contains a wHL UP SDU and a UP SDU Segment with 7 bit segment number, according to various aspects described herein. Referring to **FIG. 11B**, illustrated is an example of a portion of a header for a segmentation of a UP wHL PDU during retransmission due to a smaller grant for a segment other than the last segment of a PDU, according to various aspects described herein. Referring to **FIG. 12**, illustrated is an example of a portion of a header for a UP tSL-HL PDU during retransmission that contains the last segment of an original UP wHL PDU and the first Segment of another original UP wHL PDU from the Retransmission Buffer, according to various aspects described herein. In FIGS. 10A-12, bit strings are represented by tables in which the first and most significant bit is the left most bit of the first line of the table, the last and least significant bit is the rightmost bit of the last line of the table, and more generally the bit string is to be read from left to right and then in the reading order of the lines.

tSL-HL SDUs can be bit strings that are byte aligned (i.e. multiple of 8 bits) in length. A tSL-HL SDU can be included into a tSL-HL PDU from first bit onward.

UP tSL-HL PDU: a UP tSL-HL PDU can comprise a Data field and a UP tSL-HL PDU header.

Data field elements can be mapped to the Data field in the order which they arrive to the tSL-HL entity at the transmitter, and can have the following characteristics. The granularity of the Data field size can be one byte. The maximum Data field size can be the maximum TB size minus minimum tSL-HL PDU header size. Either of the following can be mapped to the Data field of one UP tSL-HL PDU for new transmission: Zero UP tSL-HL SDU segments and one or more UP tSL-HL SDUs, or one or two UP tSL-HL SDU segments and zero or more UP tSL-HL SDUs. UP tSL-HL SDU segments can be either mapped to the beginning or the end of the Data field, and when there are two UP tSL-HL SDU segments, they can belong to different UP tSL-HL SDUs.

The UP tSL-HL PDU header can comprise a fixed length common part (fields that are present once at the beginning for every UP tSL-HL PDU) and a variable length data-field-specific part (a set of header field(s) that can comprise one set for each of data-field elements included in UP tSL-HL PDU). The common part of the UP tSL-HL PDU header can consist of an R and a PDU-Type fields. The data-field-specific header part, which can be of variable length, can comprise an E field, a Content-Type field, 0 to 2 fields depending on Content-Type and an LI (except for Last data-field element) field. The Content-Type based 0 to 2 fields can be as follows: (a) If Content-Type indicates that associated data field element consists of padding: 0 field (no other field needed); (b) if Content-Type indicates that associated data field element consists of an SDU: 1 field (SDU SN) (New/First Transmission); (c) if Content-Type indicates that associated data field element consists of an SDU Segment: 2 fields (SDU SN and Seg-N) (New/First Transmission); (d) if Content-Type indicates that associated data field element consists of a tSL-HL PDU to be retransmitted: 1 field (RSeg-SN) (Retransmission Case); or (e) if Content-Type indicates that associated data field element consists of a segment of a tSL-HL PDU to be retransmitted: 2 fields (RSeg-SO and RSeg-SN) (Retransmission Case).

While creating a tSL-HL PDU, all the data fields can be either from retransmission buffer or all of them can be from transmission buffer. That is, when a tSL-HL PDU comprises 1 or more tSL-HL PDUs (and/or its segments) to be retransmitted, the same tSL-HL PDU can omit any SDU or its segment which are to be transmitted for the first time. During retransmission of a tSL-HL PDU, if the original tSL-HL PDU to be retransmitted is exactly equal to the grant size, the original tSL-HL PDU can be retransmitted as it is. In all other cases, an RSeg-SN can be allocated to an original PDU and retransmitted in a new tSL-HL PDU (this new tSL-HL PDU can have an original PDU, a segment of an original PDU, or a combination of more than one original PDUs and/or segments of original PDUs) as described herein.

Neither the common part nor the data-field-specific part itself needs to be byte aligned. However, the total UP tSL-HL PDU header can be byte aligned. If common part and data-field-specific part together is not byte aligned, 1 to 7 padding bits can be added at the end to make the total UP tSL-HL PDU header byte aligned. The data field can start at a new byte and be byte aligned.

UP tSL-HL PDU during Retransmission. During retransmission of a tSL-HL PDU, if the original tSL-HL PDU to be retransmitted is exactly equal to the grant size, the original tSL-HL PDU can be retransmitted as it is. In all other cases, an RSeg-SN can be allocated to an original PDU and retransmitted in a new tSL-HL PDU (this new tSL-HL PDU can comprise an original PDU, a segment of an original PDU, or a combination of more than one original PDUs and/or segments of original PDUs). The header of the tSL-HL PDU for retransmission can be generated as follows: (1) the entire original PDU (original PDU header and Data) can be considered as data during retransmission; and (2) a new header can be added, wherein each PDU can be assigned a Rseg-SN, and If Segmentation/Resegmentation is to be performed during Retransmission, the segment can be identified by RSeg-SN and Resegmentation start offset (RSeg-SO) (the end byte number can be calculated at the receiver side based on the length of the Segment, and the Content-Type can indicate whether the data field is from PDUs to be retransmitted).

Additional aspects and features that can be employed in connection with various embodiments are described below.

In various aspects, a tSL-HL according to aspects described herein can provide some or all of the following services provided to upper layer(s) (e.g., to tSL-RRC and/or to UP upper layer(s) such as IP layer) at either a nUE or tUE: (1) Transfer of user plane data to the user plane upper layer(s); (2) Transfer of control plane data to the tSL-RRC; (3) Optional header compression for user plane data; (4) Optional ciphering; (5) Optional integrity protection for control plane data. In various aspects, a tSL-HL SDU can have a maximum size (e.g., 8188 bytes, etc.). Additionally, in aspects, a lower (physical) layer can provide some or all of the following services to a tSL-HL: (1) Data transfer services; (2) Signaling of HARQ feedback; (3) Signaling of Scheduling Request(s) (4) Signaling of UL grant reception; and (5) Measurements (e.g., Channel Quality Indicator (CQI), etc.).

Additionally, in various aspects, a tSL-HL according to aspects described herein can support some or all of the following functions: (1) Transfer of data (upper layer PDUs: user plane or control plane); (2) Maintenance of tSL-HL sequence number; (3) In-sequence delivery of upper layer PDUs (i.e., tSL-HL SDUs); (4) tSL-HL SDU discard (e.g., timer based, etc.); (5) Duplicate detection and elimination of upper layer PDUs (i.e., tSL-HL SDUs); (6) Reliability Enhancement through ARQ at tSL-HL PDU level; (7) Concatenation, segmentation and reassembly of tSL-HL SDUs; (8) Re-segmentation of tSL-HL PDUs during ARQ Retransmission; (9) Reordering of tSL-HL PDUs; (10) Duplicate detection and elimination of tSL-HL PDUs; (11) Error correction through HARQ at TB level; (12) Priority handling between BSR, PHR, CP data and UP data (for transport blocks (TB) to be delivered to the physical layer on a control PRA); (13) Multiplexing of BSR, PHR, CP data and UP data onto transport blocks (TB) to be delivered to the physical layer on control PRA; (14) Demultiplexing of BSR, PHR, CP data and UP data from transport blocks (TB) delivered from the physical layer on control PRA; (15) tSL-HL re-establishment; (16) Optional header compression and decompression of UP data flows; (17) Optional ciphering and deciphering of user plane data and control plane data; and (18) Optional integrity protection and integrity verification of control plane data.

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

## Claims

1. An apparatus configured to be employed within a User Equipment, UE, comprising:
a memory (730); and
one or more processors (710) configured to implement a protocol stack for Fifth Generation, 5G, New Radio Things Sidelink, tSL, communications between 5G New Radio Things UEs and network UEs, wherein the protocol stack implements a Higher Layer, tSL-HL, entity, interfacing with an Internet Protocol, IP, layer entity and a tSL physical layer, tSL-PHY, entity also comprised by the protocol stack,
wherein the tSL-HL entity is configured to:
receive one or more user plane, UP, packets from the IP layer entity as corresponding one or more tSL-HL service data units, SDUs;
assign a distinct sequence number to each of one or more tSL-HL service data units;
buffer the one or more tSL-HL SDUs to a UP transmission buffer;
determine a physical resource assignment, PRA, and an allocated size for a tSL-HL UP protocol data unit, PDU;
generate the tSL-HL UP PDU based on the one or more tSL-HL SDUs buffered to the UP transmission buffer, the PRA, and the allocated size for the tSL-HL UP PDU;
where generating the tSL-HL UP PDU includes adding a tSL-HL header;
provide the tSL-HL UP PDU to the tSL-PHY entity for transmission based on the PRA;
generate the tSL-HL UP PDU based at least in part on a UP retransmission buffer;
determine distinct priorities for both of the UP transmission buffer and the UP retransmission buffer; and
generate the tSL-HL UP PDU based at least in part on the distinct priorities.

2. The apparatus of claim 1, wherein the tSL-HL entity is further configured to determine a first priority for the UP retransmission buffer and a second lower priority for the UP transmission buffer.

3. The apparatus of claim 1 or 2, wherein the tSL-HL UP PDU comprises one or more data fields, wherein each of the one or more data fields is:
a tSL-HL SDU from the UP transmission buffer, a segment from the UP transmission buffer, a prior tSL-HL UP PDU from the UP retransmission buffer, a segment from the UP retransmission buffer, or a re-segment from the UP retransmission buffer.

4. The apparatus of claim 3, wherein the tSL-HL header of the tSL-HL UP PDU comprises one or more subheaders, wherein each subheader is associated with a distinct data field of the one or more data fields of the tSL-HL UP PDU.

5. The apparatus of claim 4, wherein each subheader comprises a flag that indicates whether the associated distinct data field is from the UP transmission buffer or from the UP retransmission buffer.

6. The apparatus of claim 4, wherein the one or more data fields comprise a first segment associated with a given subheader of the one or more subheaders, wherein the first segment is a first segment from the UP transmission buffer or a first segment from the UP retransmission buffer, and wherein the given subheader indicates a segment number of the first segment.

7. The apparatus of claim 4, wherein the one or more data fields comprise a first re-segment from the UP retransmission buffer associated with a given subheader of the one or more subheaders, wherein the given subheader indicates a start offset of the first re-segment.

8. The apparatus of claim 1 or 2, wherein the tSL-HL entity is further configured to adjust a size of the tSL-HL UP PDU via padding to match the allocated size.

9. The apparatus of claim 1 or 2, wherein the tSL-HL entity is further configured to process at least one hybrid automatic repeat request, HARQ, ACK/NACK, acknowledgement/negative acknowledgement, response in connection with the tSL-HL UP PDU, wherein the tSL-HL entity is configured to employ a retransmission mechanism at a physical layer transport block, TB, level in response to the at least one HARQ ACK/NACK response comprising a HARQ NACK.

10. The apparatus of claim 1 or 2, wherein the tSL-HL entity is further configured to process at least one automatic repeat request, ARQ, ACK/NACK, acknowledgement/negative acknowledgement, response in connection with the tSL-HL UP PDU, wherein the tSL-HL entity is further configured to employ a retransmission mechanism at a tSL-HL UP PDU level in response to the at least one ARQ ACK/NACK response comprising an ARQ NACK.

11. The apparatus of claim 10, wherein the tSL-HL entity is further configured to:
determine, in response to the at least one ARQ ACK/NACK response comprising an ARQ NACK, a new PRA and a new allocated size for the tSL-HL UP PDU; and
based on the new allocated size, at least one of re-segment the tSL-HL UP PDU, or combine the tSL-HL UP PDU with at least one of one or more UP packets buffered to the UP transmission buffer, one or more prior tSL-HL UP PDUs buffered to the UP retransmission buffer, one or more segments, or one or more re-segments.

12. A machine readable medium comprising instructions that, when executed, cause a Fifth Generation, 5G, New Radio Things User Equipment, tUE, to:
implement a protocol stack for Fifth Generation, 5G, New Radio Things Sidelink, tSL, communications between 5G New Radio Things UEs and network UEs, wherein the protocol stack implements a Higher Layer, tSL-HL, entity, interfacing with an Internet Protocol, IP, layer entity and a tSL physical layer, tSL-PHY, entity also comprised by the protocol stack;
receive one or more tSL-HL, user plane, UP, service data units, SDUs, from the IP layer entity;
assign a unique sequence number, SN, to each of the one or more tSL-HL UP SDUs;
buffer the one or more tSL-HL UP SDUs in an UP transmission buffer;
determine a physical resource assignment, PRA, and an allocated size for a tSL-HL UP protocol data unit, PDU;
generate the tSL-HL UP PDU based on the PRA, the one or more tSL-HL UP SDU from the UP transmission buffer, and the allocated size for the tSL-HL UP PDU;
where generating the tSL-HL UP PDU includes adding a tSL-HL header;
provide the tSL-HL UP PDU to the tSL-PHY entity for transmission based on the PRA;
generate the tSL-HL UP PDU based at least in part on a UP retransmission buffer;
determine distinct priorities for both of the UP transmission buffer and the UP retransmission buffer; and
generate the tSL-HL UP PDU based at least in part on the distinct priorities.

## Patentansprüche

1. Vorrichtung, die konfiguriert ist, innerhalb eines Anwendergeräts, UE, eingesetzt zu werden und die Folgendes umfasst:
einen Speicher (730); und
einen oder mehrere Prozessoren (710), die konfiguriert sind, einen Protokollstapel für "New Radio Things Sidelink"-Kommunikationen 5ter Generation, 5G-tSL-Kommunikationen, zwischen 5G-"New Radio Things"-UE und Netz-UE zu implementieren, wobei der Protokollstapel eine Entität höherer Schicht, tSL-HK-Entität, implementiert, die mit einer Entität einer Internetprotokollschicht, IP-Entität, und einer Entität, einer physikalischen tSL-Schicht, tSL-PHY-Entität, die auch in dem Protokollstapel enthalten sind, eine Schnittstelle besitzt,
wobei die tSL-HL-Entität konfiguriert ist zum:
Empfangen eines oder mehrerer Anwenderebenenpakete, UP-Pakete, von der IP-Schichtentität als eine oder mehrere entsprechende tSL-HL-Dienstdateneinheiten, SDUs;
Zuweisen einer distinkten Folgennummer zu jeder von einer oder mehreren tSL-HL-Dienstdateneinheiten;
Zwischenspeichern der einen oder der mehreren tSL-HL-SDUs in einen UP-Übertragungszwischenspeicher;
Bestimmen einer physikalischen Betriebsmittelzuweisung, PRA, und einer zugeteilten Größe für eine tSL-HL UP-Protokolldateneinheit, PDU;
Erzeugen der tSL-HL-UP-PDU anhand der einen oder der mehreren tSL-HL-SDUs, die in den UP-Übertragungszwischenspeicher zwischengespeichert wurden, der PRA und der zugeteilten Größe für die tSL-HL-UP-PDU;
wobei das Erzeugen der tSL-HL-UP-PDU umfasst, einen tSL-HL-Dateikopf hinzuzufügen;
Liefern der tSL-HL-UP-PDU an die tSL-PHY-Entität für eine Übertragung anhand der PRA;
Erzeugen der tSL-HL-UP-PDU zumindest teilweise anhand eines UP-Neuübertragungszwischenspeichers;
Bestimmen distinkter Prioritäten sowohl für den UP-Übertragungszwischenspeicher als auch den UP-Neuübertragungszwischenspeicher; und
Erzeugen der tSL-HL-UP-PDU zumindest teilweise anhand der distinkten Prioritäten.

2. Vorrichtung nach Anspruch 1, wobei die tSL-HL-Entität ferner konfiguriert ist, eine erste Priorität für den UP-Neuübertragungszwischenspeicher und eine zweite niedrigere Priorität für den UP-Übertragungszwischenspeicher zu bestimmen.

3. Vorrichtung nach Anspruch 1 oder 2, wobei die tSL-HL-UP-PDU ein oder mehrere Datenfelder umfasst, wobei jedes des einen oder der mehreren Datenfelder Folgendes ist:
eine tSL-HL-SDU von dem UP-Übertragungszwischenspeicher,
ein Segment von dem UP-Übertragungszwischenspeicher,
eine vorherige tSL-HL-UP-PDU von dem UP-Neuübertragungszwischenspeicher, ein Segment von dem UP-Neuübertragungszwischenspeicher oder ein Neusegment von dem UP-Neuübertragungszwischenspeicher.

4. Vorrichtung nach Anspruch 3, wobei der tSL-HL-Dateikopf der tSL-HL-UP-PDU einen oder mehrere Unterdateiköpfe umfasst, wobei jeder Unterdateikopf einem distinkten Datenfeld des einen oder der mehreren Datenfelder der tSL-HL-UP-PDU zugeordnet ist.

5. Vorrichtung nach Anspruch 4, wobei jeder Unterdateikopf eine Markierung umfasst, die angibt, ob das zugeordnete distinkte Datenfeld von dem UP-Übertragungszwischenspeicher oder von dem UP-Neuübertragungszwischenspeicher ist.

6. Vorrichtung nach Anspruch 4, wobei das eine oder die mehreren Dateifelder ein erstes Segment umfassen, das einem gegebenen Unterdateikopf des einen oder der mehreren Unterdateiköpfe zugeordnet ist, wobei das erste Segment ein erstes Segment von dem UP-Übertragungszwischenspeicher oder ein erstes Segment von dem UP-Neuübertragungszwischenspeicher ist und wobei der gegebene Unterdateikopf eine Segmentnummer des ersten Segments angibt.

7. Vorrichtung nach Anspruch 4, wobei das eine oder die mehreren Datenfelder ein erstes Neusegment von dem UP-Neuübertragungszwischenspeicher umfassen, das einem gegebenen Unterdateikopf des einen oder der mehreren Unterdateiköpfe zugeordnet ist, wobei der gegebene Unterdateikopf einen Startversatz des ersten Neusegments angibt.

8. Vorrichtung nach Anspruch 1 oder 2, wobei die tSL-HL-Entität ferner konfiguriert ist, eine Größe der tSL-HL-UP-PDU über Auffüllen anzupassen, damit sie mit der zugeteilten Größe übereinstimmt.

9. Vorrichtung nach Anspruch 1 oder 2, wobei die tSL-HL-Entität ferner konfiguriert ist, mindestens eine Bestätigungsantwort/negative Bestätigungsantwort, ACK-/NACK-Antwort, einer hybriden automatischen Wiederholungsanforderung, HARQ, in Verbindung mit der tSL-HL-UP-PDU zu verarbeiten, wobei die tSL-HL-Entität konfiguriert ist, einen Neuübertragungsmechanismus auf einer Ebene eines Transportblocks, TB, einer physikalischen Schicht als Reaktion darauf, dass die mindestens eine HARQ-ACK-/NACK-Antwort eine HARQ-NACK umfasst, anzuwenden.

10. Vorrichtung nach Anspruch 1 oder 2, wobei die tSL-HL-Entität ferner konfiguriert ist, mindestens eine Bestätigungsantwort/negative Bestätigungsantwort, ACK-/NACK-Antwort, einer automatischen Wiederholungsanforderung, ARQ, in Verbindung mit der tSL-HL-UP-PDU zu verarbeiten, wobei die tSL-HL-Entität ferner konfiguriert ist, einen Neuübertragungsmechanismus auf einer tSL-HL-UP-PDU-Ebene als Reaktion darauf, dass die mindestens eine ARQ-ACK-/NACK-Antwort eine ARQ-NACK umfasst, anzuwenden.

11. Vorrichtung nach Anspruch 10, wobei die tSL-HL-Entität ferner konfiguriert ist zum:
Bestimmen als Reaktion darauf, dass die mindestens eine ARQ-ACK-NACK-Antwort eine ARQ-NACK umfasst, einer neuen PRA und einer neuen zugeteilten Größe für die tSL-HL-UP-PDU; und
anhand der neuen zugeteilten Größe Neusegmentieren der tSL-HL-UP-PDU und/oder Vereinigen der tSL-HL-UP-PDU mit mindestens einem von einem oder mehreren UP-Paketen, die in dem UP-Übertragungszwischenspeicher zwischengespeichert sind, einer oder mehrerer vorheriger tSL-HL-UP-PDUs, die in dem UP-Neuübertragungszwischenspeicher zwischengespeichert sind, einem oder mehreren Segmenten oder einem oder mehreren Neusegmenten.

12. Maschinenlesbares Medium, das Anweisungen umfasst, die dann, wenn sie ausgeführt werden, bewirken, dass ein "New Radio Things"-Anwendergerät, tUE, fünfter Generation, 5G:
einen Protokollstapel für "New Radio Things Sidelink"-Kommunikationen fünfter Generation, 5G-tSL-Kommunikationen, zwischen 5G-"New Radio Things"-UE und Netz-UE implementiert, wobei der Protokollstapel eine Entität höherer Schicht, tSL-HL-Entität, implementiert, die mit einer Entität einer Internetprotokollschicht, IP-Entität, und einer Entität einer physikalischen tSL-Schicht, tSL-PHY, die auch in dem Protokollstapel enthalten sind, eine Schnittstelle besitzt;
eine oder mehrere tSL-HL-Anwenderebenendienstdateneinheiten, tSL-HL-UP-SDUs, von der IP-Schichtentität empfängt;
eine eindeutige Folgennummer, SN, zu jeder der einen oder der mehreren tSL-HL-UP-SDUs zuweist;
die eine oder die mehreren tSL-HL-UP-SDUs in einen UP-Übertragungszwischenspeicher zwischenspeichert;
eine physikalische Betriebsmittelzuweisung, PRA, und eine zugeteilte Größe für eine tSL-HL-UP-Protokolldateneinheit, PDU, bestimmt;
die tSL-HL-UP-PDU anhand der PRA, der einen oder der mehreren tSL-HL-UP-SDUs aus dem UP-Übertragungszwischenspeicher und der zugeteilten Größe für die tSL-HL-UP-PDU bestimmt;
wobei das Erzeugen der tSL-HL-UP-PDU umfasst, einen tSL-HL-Dateikopf hinzuzufügen;
die tSL-HL-UP-PDU an die tSL-PHY-Entität für eine Übertragung anhand der PRA liefert;
die tSL-HL-UP-PDU zumindest teilweise anhand eines UP-Neuübertragungszwischenspeichers erzeugt;
distinkte Prioritäten sowohl für den UP-Übertragungszwischenspeicher als auch den UP-Neuübertragungszwischenspeicher bestimmt; und
die tSL-HL-UP-PDU zumindest teilweise anhand der distinkten Prioritäten erzeugt.

## Revendications

1. Appareil configuré pour être utilisé au sein d'un équipement utilisateur, UE, comprenant :
une mémoire (730) ; et
un ou plusieurs processeurs (710) configurés pour implémenter une pile de protocoles pour des communications sur liaison latérale d'objets, tSL, de cinquième génération, 5G, New Radio entre des UE d'objets 5G New Radio et les UE de réseau, la pile de protocoles implémentant une entité de couche supérieure, tSL-HL, s'interfaçant avec une entité de couche de protocole Internet, IP, et une entité de couche physique tSL, tSL-PHY, également comprise par la pile de protocoles,
dans lequel l'entité tSL-HL est configurée pour :
recevoir un ou plusieurs paquets de plan utilisateur, UP, à partir de l'entité de couche IP correspondant à une ou plusieurs unités de données de service, SDU, tSL-HL ;
attribuer un numéro de séquence distinct à chacune d'une ou plusieurs unités de données de service tSL-HL ;
mettre en mémoire tampon les une ou plusieurs SDU tSL-HL dans une mémoire tampon de transmission UP ;
déterminer une attribution de ressources physiques, PRA, et une taille allouée à une unité de données de protocole, PDU, tSL-HL UP ;
générer la PDU tSL-HL UP en fonction des une ou plusieurs SDU tSL-HL mises en mémoire tampon dans la mémoire tampon de transmission UP, de la PRA et de la taille allouée pour la PDU tSL-HL UP ;
dans lequel la génération de la PDU tSL-HL UP comporte l'ajout d'un en-tête tSL-HL ;
fournir la PDU tSL-HL UP à l'entité tSL-PHY en vue de sa transmission en fonction de la PRA ;
générer la PDU tSL-HL UP en fonction au moins en partie d'une mémoire tampon de retransmission UP ;
déterminer des priorités distinctes pour à la fois la mémoire tampon de transmission UP et la mémoire tampon de retransmission UP ; et
générer la PDU tSL-HL UP en fonction au moins en partie des priorités distinctes.

2. Appareil selon la revendication 1, dans lequel l'entité tSL-HL est en outre configurée pour déterminer une première priorité pour la mémoire tampon de retransmission UP et une seconde priorité inférieure pour la mémoire tampon de transmission UP.

3. Appareil selon la revendication 1 ou 2, dans lequel la PDU tSL-HL UP comprend un ou plusieurs champs de données, chacun des un ou plusieurs champs de données étant :
une SDU tSL-HL provenant de la mémoire tampon de transmission UP, un segment provenant de la mémoire tampon de transmission UP, une PDU tSL-HL UP antérieure provenant de la mémoire tampon de retransmission UP, un segment provenant de la mémoire tampon de retransmission UP ou un re-segment provenant de la mémoire tampon de retransmission UP.

4. Appareil selon la revendication 3, dans lequel l'en-tête tSL-HL de la PDU tSL-HL UP comprend un ou plusieurs sous-en-têtes, chaque sous-en-tête étant associé à un champ de données distinct des un ou plusieurs champs de données de la PDU tSL-HL UP.

5. Appareil selon la revendication 4, dans lequel chaque sous-en-tête comporte un fanion qui indique que le champ de données distinct associé provient de la mémoire tampon de transmission UP ou de la mémoire tampon de retransmission UP.

6. Appareil selon la revendication 4, dans lequel les un ou plusieurs champs de données comprennent un premier segment associé à un sous-en-tête donné des un ou plusieurs sous-en-têtes, le premier segment étant un premier segment provenant de la mémoire tampon de transmission UP ou un premier segment provenant de la mémoire tampon de retransmission UP, et le sous-en-tête donné indiquant un numéro de segment du premier segment.

7. Appareil selon la revendication 4, dans lequel les un ou plusieurs champs de données comprennent un premier re-segment provenant de la mémoire tampon de retransmission UP associé à un sous-en-tête donné des un ou plusieurs sous-en-têtes, le sous-en-tête donné indiquant un décalage de départ du premier re-segment.

8. Appareil selon la revendication 1 ou 2, dans lequel l'entité tSL-HL est en outre configurée pour ajuster une taille de la PDU tSL-HL UP par rembourrage afin de correspondre à la taille allouée.

9. Appareil selon la revendication 1 ou 2, dans lequel l'entité tSL-HL est en outre configurée pour traiter au moins une réponse d'accusé de réception positif/négatif ACK/NACK à une demande de répétition automatique hybride, HARQ, relativement à la PDU tSL-HL UP, l'entité tSL-HL étant configurée pour employer un mécanisme de retransmission à un niveau de bloc de transport de couche physique, TB, quand l'au moins une réponse ACK/NACK HARQ comprend un NACK HARQ.

10. Appareil selon la revendication 1 ou 2, dans lequel l'entité tSL-HL est en outre configurée pour traiter au moins une réponse d'accusé de réception positif/négatif ACK/NACK à une demande de répétition automatique, ARQ, relativement à la PDU tSL-HL UP, l'entité tSL-HL étant en outre configurée pour employer un mécanisme de retransmission à un niveau de PDU tSL-HL UP quand l'au moins une réponse ACK/NACK ARQ comprend un NACK ARQ.

11. Appareil selon la revendication 10, dans lequel l'entité tSL-HL est en outre configurée pour :
déterminer, quand l'au moins une réponse ACK/NACK ARQ comprend un NACK ARQ, une nouvelle PRA et une nouvelle taille allouée pour la PDU tSL-HL UP ; et
en fonction de la nouvelle taille allouée, au moins resegmenter la PDU tSL-HL UP ou combiner la PDU tSL-HL UP avec au moins un des un ou plusieurs paquets UP mis en mémoire tampon dans la mémoire tampon de transmission UP, une ou plusieurs PDU tSL-HL UP antérieures mises en mémoire tampon dans la mémoire tampon de retransmission UP, un ou plusieurs segments ou un ou plusieurs re-segments.

12. Support lisible par machine comprenant des instructions qui, à leur exécution, amènent un équipement utilisateur des Objets, tUE, de cinquième génération, 5G, New Radio, à :
implémenter une pile de protocoles pour des communications sur liaison latérale d'objets, tSL, de cinquième génération, 5G, New Radio entre des UE d'objets 5G New Radio et des UE de réseau, la pile de protocoles implémentant une entité de couche supérieure, tSL-HL, s'interfaçant avec une entité de couche de protocole Internet, IP, et une entité de couche physique tSL, tSL-PHY, également comprise par la pile de protocoles, recevoir une ou plusieurs unités de données de service, SDU, de plan utilisateur, UP, tSL-HL, à partir de l'entité de couche IP ;
attribuer un numéro de séquence, SN, unique à chacune des une ou plusieurs SDU tSL-HL UP ;
mettre en mémoire tampon les une ou plusieurs SDU tSL-HL UP dans une mémoire tampon de transmission UP ;
déterminer une attribution de ressources physiques, PRA, et une taille allouée pour une unité de données de protocole, PDU, tSL-HL UP ;
générer la PDU tSL-HL UP en fonction de la PRA, des une ou plusieurs SDU tSL-HL UP provenant de la mémoire tampon de transmission UP, et de la taille allouée pour la PDU tSL-HL UP ;
dans lequel la génération de la PDU tSL-HL UP comporte l'ajout d'un en-tête tSL-HL ;
fournir la PDU tSL-HL UP à l'entité tSL-PHY en vue de sa transmission en fonction de la PRA ;
générer la PDU tSL-HL UP en fonction au moins en partie d'une mémoire tampon de retransmission UP ;
déterminer des priorités distinctes pour à la fois la mémoire tampon de transmission UP et la mémoire tampon de retransmission UP ; et
générer la PDU tSL-HL UP en fonction au moins en partie des priorités distinctes.
